# EUROPEAN PATENT APPLICATION

(11) **EP 4 768 888 A1**
(43) Date of publication of application: **01.07.2026**
(21) Application number: 25227160.6
(22) Date of filing: 24.12.2025
(51) Int. Cl.: G01N 1/31, G01N 35/00

(54) **ADVANCED TISSUE STAINING SYSTEM WITH HUMIDITY CONTROLLER AND METHOD**

(30) Priority: 31.12.2024 US 202419007316
(71) Applicant: Sakura Finetek U.S.A., Inc., Torrance, CA 90501 (US)
(72) Inventor: SHAH, Amit D., Redondo Beach, 90278 (US); FLORES, Cristina, Downey, 90240 (US); SCHINAZI, Robert Glen, Las Vegas, 89113 (US)
(74) Representative: Studio Torta S.p.A.

(57) **Abstract**

A sample processor including a body including an inner surface that defines a chamber including an opening in a side of the body and including a volume to accommodate a least one microscope slide therein; a door comprising a first position to cover the opening of the body and a second position to expose a portion of the chamber through the opening; a slide bed disposed in the chamber; one of an internal humidity generator disposed in the chamber and an external humidity generator coupled to the chamber. A system including at least one sample processor at least one reagent outside the body of the at least one sample processor and a method including subjecting a sample on a microscope slide in a sealed chamber to a pressure greater than ambient and a humidity greater than 60 percent; and processing the sample.

## Description

### FIELD

An automated system for depositing reagents on biological specimens.

### BACKGROUND

In various settings, processing and testing of biological specimens is required for diagnostic purposes. Generally speaking, pathologists and other diagnosticians collect and study samples from patients, and utilize microscopic examination, and other devices to assess the samples at cellular levels. Numerous processing steps typically are involved in pathology and other diagnostic processes, including the collection of biological samples such as blood and sample, preparing the samples, preparation of microscope slides, staining samples on microscope slides, examination, re-testing or re-staining, collecting additional samples, re-examination of the samples, and ultimately the offering of diagnostic findings.

Sample (e.g., sample) staining processors or stainers can be operated with varying levels of automation to process human or animal sample specimens for histology or pathology uses. Various types of chemical reagents can be used at various stages of sample processing and various systems have been developed for delivering reagents to specimens containing slides. Examples of known reagent delivery systems include small quantity release dispensers, manual pouring into reagent vats, or via bulk containers connected with a stainer via tubing.

There are various disadvantages of known systems. For example, manually pouring into, or draining, reagent vats is susceptible to cross contamination, is time consuming and requires pouring accuracy, thereby decreasing the overall efficiency and accuracy of the sample processing system. Another disadvantage is that manually pouring and draining reagents can be sloppy, requiring clean-up of spills and consequential instrument down-time. A further disadvantage is that manually selecting and applying the correct reagent introduces significant risk of human error and increased possibility of reagent selection errors and application errors resulting in false positive or negative assay results, leading not only to a decrease in test accuracy and operational efficiency but also misdiagnosis.

### BRIEF DESCRIPTION OF THE DRAWINGS

The embodiments of the invention are illustrated by way of example and not by way of limitation in the figures of the accompanying drawings in which like references indicate similar elements. It should be noted that references to "an" or "one" embodiment in this disclosure are not necessarily to the same embodiment, and such references mean at least one.
**Figure 1** shows a perspective side view of a sample processor with a door of a body of the sample processor in an open position.
**Figure 2** shows a perspective side view of a sample processor with a door of a body of the sample processor in a closed position and the slide bed therein raised.
**Figure 3** shows a top side perspective view of the slide bed of the sample processor of **Figure 1** inside a chamber of the body and a mechanism that controls movement of the slide bed isolated from other components of sample processor.
**Figure 4** shows a top side perspective view of the slide bed of the sample processor of **Figure 1** outside a chamber of the body and a mechanism that controls movement of the slide bed isolated from other components of sample processor.
**Figure 5** shows a perspective top side view of an underside of the top of the body of the sample processor of **Figure 1****.**
**Figure 6** illustrates a perspective view of a sample processing system including several sample processors similar to the sample processor of **Figure 1****.**
**Figure 7** shows a perspective left side view of a carousel assembly of the sample processing system in isolation.
**Figure 8** shows a perspective right side view of a portion of a gantry of the carousel assembly of **Figure 7** and an x-direction (longitudinal) drive mechanism in isolation.
**Figure 9** shows a perspective rear side view of a U-shaped bracket and a transversal drive support bracket of the carousel assembly of **Figure 7** in isolation.
**Figure 10** is a perspective rear side view of a portion of the carousel assembly of **Figure 7****.**
**Figure 11** shows a side perspective view of an arm assembly of the carousel assembly isolated from the carousel.
**Figure 12** shows a perspective front left side view of a storage rack of the sample processing system of **Figure 6** isolated from other components of the system.
**Figure 13** shows a side perspective view of a reagent cartridge that is representative of reagent cartridges operable for storage in the storage rack of **Figure 12** and use in the sample processing system of **Figure 6****.**
**Figure 14** shows a perspective front right side view of a portion of the storage rack of **Figure 12** including two reagent cartridges stored therein.
**Figure 15** shows a portion of the carousel assembly of **Figure 12** including a pedestal or cartridge carrier plate isolated from a base of a column of the carousel assembly.
**Figure 16** shows a front side view of a service station of the sample processing system of **Figure 6****.**

### DETAILED DESCRIPTION

In the following paragraphs, the invention will be described in detail by way of example with reference to the accompanying drawings. Throughout this description, the embodiments and examples shown should be considered as exemplars, rather than as limitations on the present invention. Furthermore, reference to various aspects of the embodiments disclosed herein does not mean that all claimed embodiments or methods must include the referenced aspects.

A sample processor is disclosed. The sample processor representatively includes a body including an inner surface that defines a chamber including an opening in a side of the body and comprising a volume to accommodate a least one microscope slide therein. The sample processor also includes a door including a first position to cover the opening of the chamber and a second position to expose a portion of the chamber through the opening; a slide bed disposed in the chamber; and one of an internal humidity generator disposed in the chamber and an external humidity generator coupled to the chamber. The sample processor may be a stand-alone sample processor or may be combined with one or more other similar sample processors as part of a sample processing system.

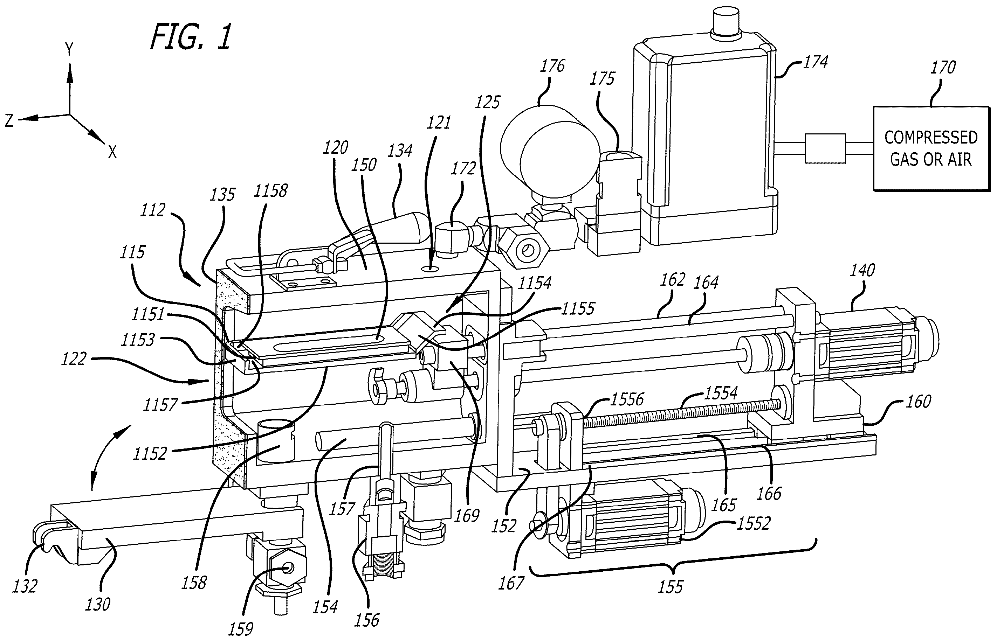

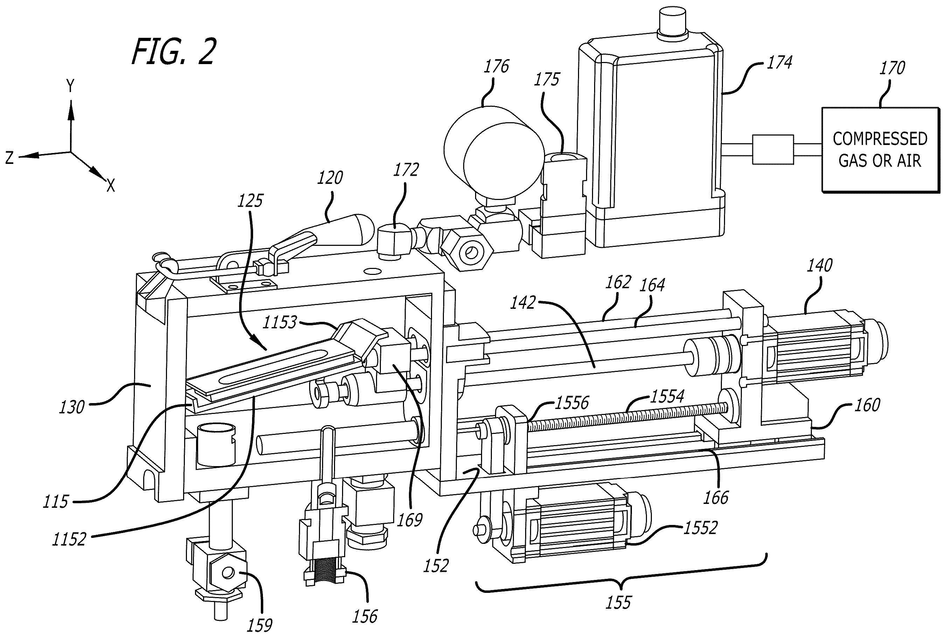

**Figure 1** shows a perspective side view of a sample processor. Sample processor 112 includes body 120. Body 120 of sample processor 112 in this representative example is rectangular and includes a top, a base and a pair of opposing sidewalls that define a length dimension (z direction) and a separate pair of opposing sidewalls that define a width dimension (x direction) with the top, the base and the two pairs of sidewalls collectively defining chamber 125 to accommodate a single microscope slide therein. Representatively, a microscope slide may be a flat piece of glass having a thickness of one millimeter (mm) (0.04 inches) and a length of 75 mm (about 3 inches) and a width of 26 mm (about 1 inch). A length of chamber 125 may be on the order of 80 mm to 100 mm (3.2 inches to 4 inches) and a width of chamber 125 may be on the order of 28 millimeters to 40 millimeters (1.1 inches to 1.6 inches). It is appreciated that body 120 may have other shapes besides rectangular so long as the shape can accommodate a single slide. In another representative example, body 120 may have dimensions to accommodate multiple slides in chamber 125 (e.g., two slides, three slides, four slides). Body 120 may be made of a material that is chemically inert to the reagents commonly used in a staining process or a tissue processing process to prepare a tissue for staining. Representative metal material includes, but is not limited to, stainless steel, zinc alloy, aluminum alloy, silver. A silver material may be used, for example, to impart antimicrobial properties to body 120. Other exemplary material for body 120 may include heat-transferable polymeric materials such as plastics or cellulosic (i.e., cellulose based or comprising) materials, ceramic, Teflon^{®}, glass etc. Body 120 can be formed by any process known in the art such as injection molding, machining or any other manufacturing process suitable for generating the desired features. In addition, it should be appreciated that body 120 can be composed of more than one of the above discussed materials. **Figure 1** also shows body 120 of sample processor 112 includes opening 122 in one side to access chamber 125. In the illustrated embodiment, opening is in a sidewall (e.g., a front sidewall of body 120). Disposed around opening 122 of body 120 as viewed is gasket or seal 135 of a rubber or other polymer material. Gasket or seal 135 may serve to seal or substantially seal (e.g., hermetically seal) chamber 125 when a door covers opening 122 in body 120 (see **Figure 2**). Representatively, chamber 125 may be able to be completely sealed (i.e., hermetically sealed so that no air or gas can escape chamber 125 and fluid sealed so that no fluid can escape from chamber 125). **Figure 2** shows a perspective side view of a sample processor with a door of a body of the sample processor in a closed position.

Sample processor 112 includes a door of, for example, a plastic or metal material (e.g., stainless steel, zinc alloy, aluminum alloy, silver) having dimensions to cover opening 122 to chamber 125. Door 130 includes a generally rectangular portion having length (z-direction) and width (x-direction) dimensions similar to the side of body 120 defining opening 122. One end of door 130 (a top end as viewed) includes clevis portion 132 projecting in a length direction (z-direction) from the generally rectangular portion. An opposite second end is connected to a base of body 120 by a hinge so that door 130 can be rotated between a horizontal (z-direction) open position and a vertical (y-direction) closed position. The movement of door 130 between an open position and a closed position may be controlled by a motor that, for example, rotates an axle disposed through the hinge so that door 130 rotates on the axle. Connected to a top surface of body 120 is latch member 134. In this example, latch member 134 is a horizontal U-latch toggle clamp that engages with clevis portion 132 when door 130 is in a vertical closed position and clamps door 130 to body 120. It is appreciated that latch member 134 and clevis portion 132 may be an electronic door latch mechanism and/or an electromechanical door latch mechanism that may be electrically connected to a controller including non-transitory, machine-readable instructions to control the latching as well as the opening and closing of door 130.

Disposed within chamber 125 of body 120 is slide bed 115. Slide bed 115, in this example, includes platen 1152 that has rectangular shape with a planar top surface having dimensions to accommodate a microscope slide laying horizontally as viewed on platen 1152 (e.g., length (z-dimension) and width (x-dimension) equivalent or slightly greater (e.g., 1 millimeter (mm) to 2 mm greater) than a microscope slide). Surrounding one z-dimension side and a first end of platen 1152 (a left end or front end as viewed) is a y-dimension projecting lip 1153. Disposed on platen 1152 and connected thereto is platform 1151 that has dimensions similar to a microscope slide (e.g., 75 mm by 25 mm). Platform 1151 will support a microscope slide thereon (microscope slide 150). Platform 1151 has z- and x-dimensions less than platen 1152. The smaller z- and x-dimensions of platform 1151 relative to platen 1152 creates a gutter (gutter 1157) between an edge of platform 1151 and lip 1153 projecting from an edge of platen 1152. One end or both ends (z-dimension ends) of platen 1152 may also include an opening (opening 1158) therethrough to allow drainage of reagents introduced on platform 1151.

As shown in **Figure 1****,** a second end of slide bed 115 (a right end as viewed) includes step portion 1154 that is in a different plane (a higher y-dimension plane as viewed) than platen 1152. Step portion 1154 is separated from platen 1152 by ramp 1155 that is positioned at an angle on the order of 20° to 45°.

**Figure 1** shows microscope slide 150 disposed on platform 1151 of slide bed 115. Microscope slide 150 may have a sample (e.g., a tissue sample) thereon and the microscope slide may be positioned on platen 1152 with the sample facing away from platen 1152 (facing upward as viewed) or facing platen 1152 (facing downward as viewed).

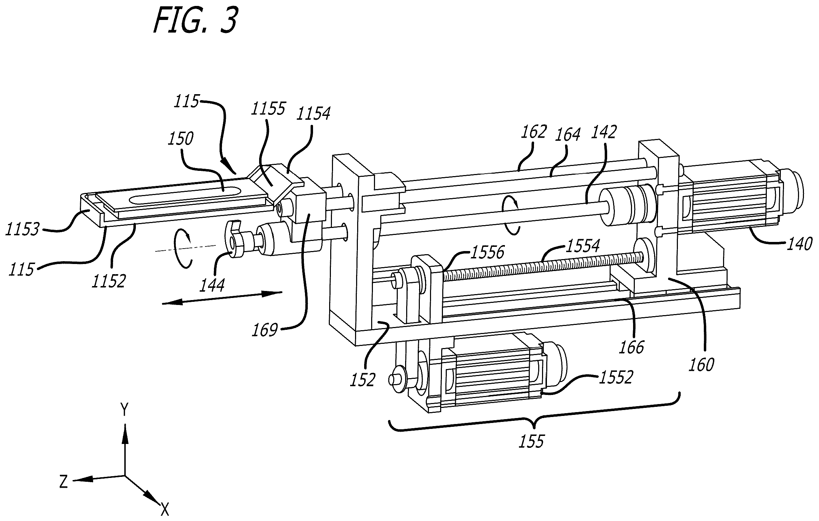

**Figure 3** shows a top side perspective view of slide bed 115 and a mechanism that controls movement of slide bed 115 isolated from other components of sample processor 112. Referring to **Figure 3****,** in this example, slide bed 115 is operable to be rotated lengthwise in one direction to, for example, remove liquid. **Figure 3** shows shaft 142 connected at one end to rotary motor 140 (stepper, brush DC or brushless servo) and including collar 144 around a second opposite end of shaft 142. Collar 144 is disposed below slide bed 115. Collar 144, in one example, has a xy cross-sectional shape of a Fibinacci spiral. A Fibinacci spiral representatively gets wider (or further from its origin) by a certain factor for every quarter turn it makes. In this configuration, collar 144 is disposed below slide bed 115 so that as collar rotates (e.g., clockwise), only the widest point or quadrant of the spiral shape contacts a bottom surface of slide bed 115 and lifts slide bed 115 at the widest point that allows collar 144 to contact and lift slide bed 115. A contact point of slide bed 115 by collar 144 at its widest point may not be at a x-dimension midpoint of the slide bed but may be offset a small distance (e.g., 1 mm to 2 mm) to one side (e.g., a left side as viewed) so that the lifting of slide bed 115 by collar 144 causes one z-dimension side of slide bed 115 to be raised so that slide bed 115 tilts downward to the other z-dimension side as illustrated in **Figure 2****.** The raised z-dimension side of slide bed 115 includes lip 1153 at the edge of platen 1152 while the other lowered side may not include lip 1153. The tilting of slide bed 115 allows for removal of excess fluid (e.g., reagent) that may be on microscope slide 150 on slide bed 115 or on slide bed 115 itself to drain off the lowered z-dimension side.

As illustrated in **Figures 1-3****,** rotary motor 140 is located outside of body 120. Rotary motor 140 is connected to bracket 160. Bracket 160 is seated and connected to platform 152 which is connected to a side of body 120 opposite the side including opening 122. Shaft 142 extends from rotary motor 140 through an opening in body 120 so that a portion of shaft 142 and collar 144 are inside chamber 125. The opening in body 120 through which shaft 142 is disposed may be sealed with, for example, a gasket (i.e., hermetically sealed so that no air or gas can escape chamber 125 and fluid sealed so that no fluid can escape from chamber 125).

Sample processor 112 also includes a mechanism to move slide bed 115 in a z-direction. Sample processor 112 includes linear actuator 155 that includes rotary motor 1552 (stepper, brush DC or brushless servo) and threaded lead screw 1554 with captive precision nut 1556. Rotary motor 1552 is disposed below and connected to platform 152 in this example. Rotary motor 1552 is connected to precision nut 1556 and lead screw is threaded into precision nut 1556. A distal end of lead screw (right side as viewed) is connected to bracket 160. Sample processor 112 also includes rod 162 and rod 164 parallel to one another and each fixedly connected at a proximal end (left end as viewed) to bracket 169 inside chamber 125 and at a distal end (right side as viewed) to bracket 160. Bracket 169 is positioned below and connected to step 1154 of slide bed 115. The openings in body 120 for rod 162 and rod 164 may be sealed with, for example, a gasket (i.e., hermetically sealed so that no air or gas can escape chamber 125 and fluid sealed so that no fluid can escape from chamber 125).

As a rotor of rotary motor 1552 of linear actuator 155 spins, the linear actuator converts the rotation of the motor into linear motion by moving rotating nut 1556 on lead screw 1554 causing lead screw 1554 to move in a z-direction. The movement of lead screw 1554 causes bracket 160 to also move in a z-direction. Sample processor 112 further includes a pair of rails or tracks 166 on platform 152. Bracket 160 is connected to the pair of rails or tracks 166 and can move in a z-direction on the rails and tracks in response to movement directed by linear actuator 155.

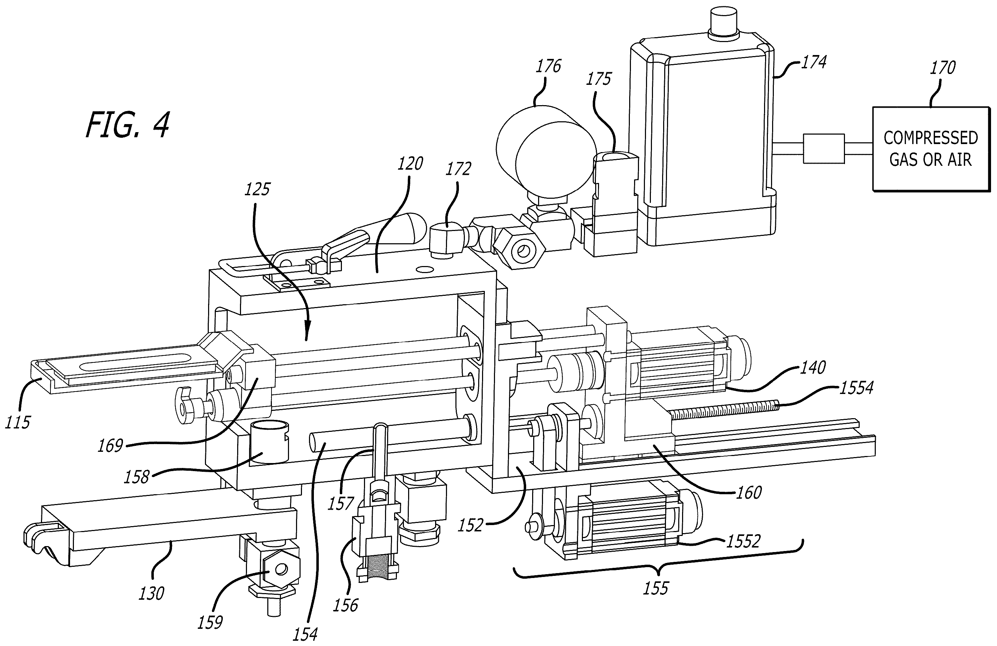

Linear actuator 155 is connected to platform 152 which is connected to a side of body 120 opposite the side including opening 122. When door 130 is in an open position (see **Figure 1**), linear actuator may move slide bed 115 from a position within chamber 125 of body 120 to a position outside the chamber as shown in **Figure 4****.** When slide bed 115 is outside body 120, a microscope slide may be placed on an empty slide bed or, if present, removed from a slide bed. One or more processing treatments may also be introduced to a sample on a slide bed when the slide bed is outside body 120.

Sample processor 112 may function as a humidor capable of manipulating and maintaining humidity to reduce reagent evaporation and sample (e.g., tissue) drying. A representative humidity level may be a relative humidity above 50 percent, such as above 60 percent to 100 percent, such as 70 percent to 100 percent, such as 80 percent to 100 percent, or such as 90 percent to 100 percent. In the example illustrated in **Figure 1****,** body 120 includes chamber 125 that has dimensions to accommodate a reservoir beneath slide bed 115. The reservoir may be filled with water to produce humidity in chamber 125. **Figure 1** shows valve 156 connected to conduit 157 that extends from a point outside body 120 through a bottom wall of body 120 to a point inside chamber 125 (e.g., a few millimeters inside chamber 125). A fluid (e.g., water) source may be connected to valve 156 to introduce fluid into chamber 125. Conduit 157 may also include a flow meter to monitor the amount of fluid introduced into chamber 125. In one example, valve 156 and a flow meter, if present, may be electrically connected to a controller that includes non-transitory machine-readable instructions to introduce a certain volume of fluid into chamber 125 through valve 156. Also extending from chamber 125 through a base wall of body 120 is conduit 158 that may serve as a drain to drain the fluid contents of the reservoir in chamber 125. Conduit 158 is connected at a distal end to drain valve 159 outside body 120. In one example, valve 159 may be electrically connected to a controller that includes non-transitory machine-readable instructions to actuate the valve (open, close).

Sample processor 112 in **Figure 1** also includes heat element 154. In the example shown in **Figure 1****,** heat element 154 is an immersion heater installed directly into the reservoir of chamber 125. In another example, heat element 154 may be positioned on or in conduit 157 to heat fluid being delivered to the reservoir of chamber 125. Heat element 154 may be an electrically powered resistive heat element. Heat element 154 may be electrically connected to a controller that includes non-transitory machine-readable instructions to power and control the heat element through, for example, a thermostat. The ability to heat a fluid (e.g., water) in the reservoir allows chamber 125 of sample processor 112 to produce humidity at elevated temperatures by producing water vapor. An ultrasonic humidifier could also be placed in the reservoir and powered to expel reservoir droplets within chamber 125 that evaporate and humidify chamber 125.

Another technique to produce humidity in chamber 125 of sample processor 112 is to introduce air or an inert gas (ambient or heated) through the fluid reservoir to produce a humid environment. Representatively, air or an inert gas from an ambient or heated source can be connected to drain valve 159 and the air or inert gas can be introduced into the reservoir through conduit 158. A further alternative is to use an ultrasonic humidifier to expel tiny water droplets into the air that evaporate into water vapor, humidifying chamber 125.

The production of humidity from a reservoir in chamber 125 of sample processor 112 can result in the reduction of a volume of fluid in the reservoir. For example, water will evaporate as it produces humidity in the chamber. To monitor a fluid level in the reservoir, sample processor 112 may include a sensor, such as a float sensor, in the chamber that sends a signal, such as to a controller, indicative of a level of fluid in the reservoir. When the fluid level drops (the volume decreases) to a predetermined point, additional fluid is added to the reservoir (e.g., non-transitory machine-readable instructions from a controller direct the introduction of a certain volume of fluid (e.g., water) into chamber 125 through valve 156.

Sample processor 112 may also include a humidity sensor in chamber 125. Representatively, a humidity sensor may be connected to a top wall of body 120 inside chamber 125 and provide an indication of a humidity level in chamber 125. A humidity sensor may be connected to a visual indicator like a display (e.g., a liquid crystal display) outside chamber 120 or connected to a controller that may include non-transitory, machine-readable instructions to control humidity levels (e.g., to produce, reduce or maintain an amount of humidity in chamber).

Another option to produce humidity in chamber 125 of sample processor 112 is to produce humidity from an external source rather than from a reservoir in chamber 125. Steam produced in an external boiler may be supplied into chamber 125, such as through conduit 157. Air or an inert gas (ambient or heated) may be bubbled through an external reservoir (ambient or heated) to produce humid air at a desired moisture level that could be supplied into chamber 125, such as through conduit 157. Further, an ultrasonic generator could produce water droplets (ambient or heated) that could be fed to chamber 125, such as through conduit 157.

Sample processing techniques may involve processing a sample (such as a tissue sample on a microscope slide) at other than ambient pressure and/or other than ambient temperature. Representative pressure for certain sample processing operations may be 1 atmosphere (atm) (ambient) to 3 atm (14.7 pounds per square inch (psi) to 44.1 psi), such as 1 atm to 2 atm (14 psi to 29.4 psi), or such as between 1 atm and 2 atm, such as 1.7 atm (25 psi). Representative temperature for certain sample processing operations may be 20°C (approximately ambient) to 150°C, such as between 20°C and 150°C, such as 30°C to 140°C, such as 40°C to 130°C, such as 50°C to 120°C, such as 60°C to 110°C, such as 70°C to 150°C, such as 100°C to 140°C, such as 110°C to 140°C, or such as 120°C to 130°C.

To increase pressure in sample processor 112, air or an inert gas may be introduced into chamber 125 of body 120 when door 130 is in a closed position and body 120 is hermetically sealed (see **Figure 2**). Connected to body 120 of sample processor 112 may be compressor or pump 170 that is a source of compressed air or inert gas. Representatively, sample processor 112 may include fitting 172 (e.g., a valve or valve and conduit) disposed in body 120 to chamber 125. **Figures 1** and **2** show fitting 172 connected to body 120 on the top wall of the body. It is appreciated that it may be connected to another wall (e.g., a sidewall, the bottom wall). Compressor or pump 170 may be connected to fitting 172 via a conduit, e.g., a plastic or metal conduit. Disposed in the conduit between compressor or pump 170 and fitting 172, in this example, is pressure regulator 174, pressure release valve 175 and pressure gauge 176. Pressure regulator 174 may be used to regulate (e.g., set) a desired or predetermined pressure in chamber 125. Pressure regulator 174 may allow a steady or constant pressure (e.g., elevated pressure) in chamber 125 or pulses of increased pressure. Pressure release valve 175 may be used to release excess pressure built-up in chamber 125 or to return chamber 125 to an ambient pressure. Pressure gauge 176 may be used to indicate to an operator of sample processor 112 a pressure level in chamber 125. Pressure gauge 176 in the illustrated embodiment includes a sensor and a display. It is appreciated that pressure gauge 176 may not include a display at the point of connection in the conduit between fitting 172 and compressor 170. Pressure gauge 176 be connected, for example, electrically to a monitor that displays a pressure value read by the sensor in the conduit.

Another technique to increase pressure in chamber 125 is to modify the volume of chamber 125. This may be done, for example, by compressing one or more of a top, bottom or sidewall of body 120. For example, the upper portions of the sidewalls of body 120 may have concertinaed sides to allow the sidewalls to expand and contract. The concertinaed sides allow a downward force on the top of body 120 to compress the concertinaed portions of the sidewalls like an accordion to decrease a volume of chamber 125 and, when the compression is done with door 130 in a closed position, to increase a pressure in chamber 125.

Sample processor 112 may modify a temperature in chamber 125. One way a temperature in chamber 125 may be increased is by heating a fluid in a reservoir as described above with respect to generating humidity levels in chamber 125. In addition to this technique or as an alternative, slide bed 115 may include a heater such as a thermocouple in contact with an underside of slide bed 115. Another heating technique includes one or more heaters to heat the ambient area around slide bed 115. Examples include resistive electrical heaters or infrared heaters positioned within chamber 125. A still further technique is a heat jacket wrapped around an exterior of body 120 to heat chamber 125 from outside the chamber. The heat source(s) may be connected to a controller allowing machine-readable, non-transitory instructions associated with the controller to control the heat source(s) and control a temperature in chamber 125.

Sample processing such as tissue processing to prepare a tissue sample on a microscope slide for pathological evaluation typically involves many steps. Representatively, such steps include heating to adhere a tissue sample to a microscope slide, dewaxing to remove paraffin and expose the sample, antigen retrieval to expose antigenic sites in or on the tissue sample and one or more staining operations using dyes or labels to color tissue sections and make them visible under a microscope to allow the sample to be evaluated. Representative dyes include hematoxylin, eosin, Masson's trichrome, modified GMS silver stain, periodic acid Schiff, and Perls' Prussian blue iron. Other methods of staining include, but are not limited to, immunohistochemistry or in situ hybridization to target specific proteins or DNA/RNA sequences in a sample.

Many of these steps in sample processing involve contacting the tissue sample with one or more reagents. These include bulk reagents and primary reagents. Examples of bulk reagents include, without limitation, the following: Tris Buffered Saline (TBS), Saline Sodium Citrate (SSC), distilled water, dewaxing solution, alcohol and xylene. Examples of primary reagents include without limitation, stains, such as hematoxylin and eosin, any type of antibodies, probes, nucleic acids (RNA, DNA or oligonucleotides), ligands, ligand receptors, enzymes or enzyme substrates or any other molecules suitable for a desired use. The reagents can be in a natural form, purified, concentrated, diluted or otherwise conditioned. Additional primary reagents may include signal molecules such as fluorescent dyes, enzymes, conjugates (e.g., biotin, avidin, streptavidin), metals (such as silver or gold particles), dyes, stains, radioactively tagged molecules, or any other substances such as signaling or reporter molecules.

Referring to tissue processor 112, a dispensing of reagents onto a sample on a microscope slide may take place with the microscope slide either outside of chamber 125 or inside chamber 125 or a combination of inside and outside chamber 125 depending on the reagent. Bulk reagents, for example, may representatively be dispensed onto a microscope slide inside chamber 125. **Figure 1** shows opening 121 through a top of body 120. Connected to opening 121 may be a conduit (not shown) to which a reagent may be connected to dispense the reagent from outside of body 120 and chamber 125. One reagent may be connected to the conduit or multiple reagents may be connected to the conduit through, for example, a manifold. Opening 121 is directly above ramp 1155 of slide bed 115. Reagents introduced through opening 121 may contact ramp 1155 and flow by gravity onto slide 150 or under slide 150 if the slide is positioned with a sample side down. There can also be a nozzle or nozzles inside chamber 125 connected to a conduit through opening 121. Such a nozzle or nozzles can be operable to dispense a spray or a curtain flow (wide laminar flow) of reagent inside chamber 125. Such nozzle or nozzles may direct a flow of a reagent onto a top surface of slide 150 (when a microscope slide is positioned with a sample side up as viewed) or onto ramp 1155 and/or step portion 1154 (when a microscope slide is positioned with a sample side down as viewed) or when purging a reagent or the conduit so that purged reagent goes from ramp 1155 directly into gutter 1157, such as when a microscope slide is positioned with a sample side up.

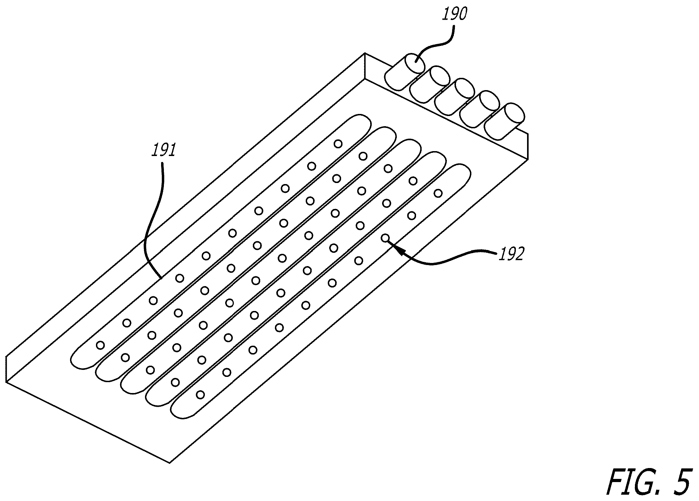

**Figure 5** shows a perspective top side view of an underside of the top of body 120 illustrating another technique for dispensing reagent(s) onto or under a microscope slide inside chamber 125 as an alternative to opening 121 or in addition to opening 121. Disposed projecting from one side of the top are a number of fluid connectors 190 (e.g., 4-8 fluid connectors). Fluid connectors 190 may be fittings or couplings that allow a fluid conduit (e.g., polymer tubing to be connected thereto). Representatively, fluid connectors 190 may project from a right side of the top of body 120 as viewed from **Figure 1** (a side opposite door 130). An underside of the top of body 120 includes a number of conduits 191 disposed lengthwise across a length of the top. Individual ones of fluid connectors 190 are fluidly connected to conduits 191 so that fluid may be delivered through fluid connectors 190 to conduits 191. Conduits 191 may be a tubing material such as a metal (e.g., copper, aluminum, stainless steel). Each conduit 191 may have openings 192 along its length to discharge a fluid from the conduit in a direction of slide bed 125. Each opening in a conduit may include a nozzle to control a flow direction and rate. The dispense of a reagent from each conduit may be a flow, a spray or a liquid curtain to provide optimum coverage of the sample on a microscope slide or of the entire microscope slide surface.

In one example, bulk reagents may individually be connected to fluid connectors 190. The bulk reagents may be contained in individual containers and be connected to individual ones of fluid connectors 190 through conduits running between, for example, a respective bulk reagent container and a fluid connector. A bulk reagent may be supplied to a fluid connector through the use of a pump as necessary, such as an individual in-line pump for each bulk reagent container connected to a fluid connector. Non-transitory, machine-readable instructions associated with a controller may control the metering of a reagent from a bulk reagent container such as by a timer or by an individual in-line flow meter (e.g., a flow meter in a conduit between the bulk reagent container and the fluid connector). A temperature of a reagent dispensed may be altered or controlled through pre-heating or cooling, as necessary, prior to the dispense. Representative techniques for modifying a temperature of a reagent to be dispensed include heating or cooling of the reagent container before dispensing (e.g., refrigeration of container for cooling, oven or hot plate for heating), external heaters or ribbon heaters wrapped around a conduit between the container and a respective conduit 191.

An example of a bulk reagent is a wash solution such as water or a water and surfactant and/or buffer mixture. A wash solution may be used to wash the sample on the microscope slide, the entire microscope slide or slide bed 115 (with or without a microscope slide thereon). Representatively, to wash slide bed 115 with or without a microscope slide on platform 1151, a wash solution may be introduced through opening 121 in a top of body 120 (see **Figure** 1) to contact ramp 1155 which allows the wash solution to flow directly in gutter 1157 without going on the microscope slide. The wash solution in gutter 1157 eventually will drain out from an opening(s) in a base of slide bed 115 either while the slide bed is horizontal or when it is tilted (or both).

Bulk reagents dispensed into chamber 125 of body 120 may be dispensed at below ambient temperature, ambient temperature or elevated (above ambient) temperature. An elevated temperature may be achieved by, for example, heating the conduit that transfers the reagent into chamber 125 (e.g., a resistive heater around the conduit with output controlled by instructions from a controller) or by having a separate reservoir for pre-heating the reagent to a determined elevated temperature.

In one example, the reagent dispense of primary reagents may take place with the sample and at least a portion of the microscope slide containing the sample outside of the chamber 125 of body 120. Representatively, door 130 of body 120 may be moved from a closed position to an open position. With door 120 in an open position, slide bed 115 may be moved from a position inside chamber 125 to a position outside chamber 125. The opening of door 130 and the movement of slide bed 115 from a position inside chamber 125 to a position outside chamber 125 may be controlled by a controller including non-transitory, machine-readable instructions to initially open door 130 and then direct linear actuator 155 to move slide bed 115 to a position outside chamber 125.

Once a portion of slide bed 115 including microscope slide including a tissue sample is outside chamber 125, a reagent dispense may be performed by various methods. Such methods include, but are not limited to, overhead dispensing through a thermal or piezoelectric inkjet printhead, through a spray nozzle, through a micro-electromechanical dispense mechanism, through puncturing a reagent vessel and drip mechanism. Examples of dispensing through a thermal or piezoelectric inkjet printhead are described in U.S. Patent Publication 2023/0055997 (Serial No. 17/790,040) titled "Automated Staining System and Reaction Chamber" which is incorporated herein by reference. Examples of dispensing through a spray nozzle and through a puncturing a reagent vessel and drip mechanism are described in U.S. Patent No. 10,295,444 (Serial No. 14/579,858) titled "Automated Staining System and Reaction Chamber" which is incorporated herein by reference.

A microscope slide may be placed with a sample facing up (away from the slide bed) or facing down (facing the slide bed). Reagent dispense from above, either a bulk reagent or primary reagent, may be directly onto the sample or onto the slide when the sample is facing up or onto slide bed 115 when the sample is facing down so that the reagent can migrate to the sample through capillary action.

From time to time, excess reagent including wash solution may be drained from sample processor 112. As noted above, extending from chamber 125 through a base wall of body 120 is conduit 158 that may serve as a drain to drain the fluid contents of the reservoir in chamber 125. Conduit 158 is connected at a distal end to drain valve 159 outside body 120.

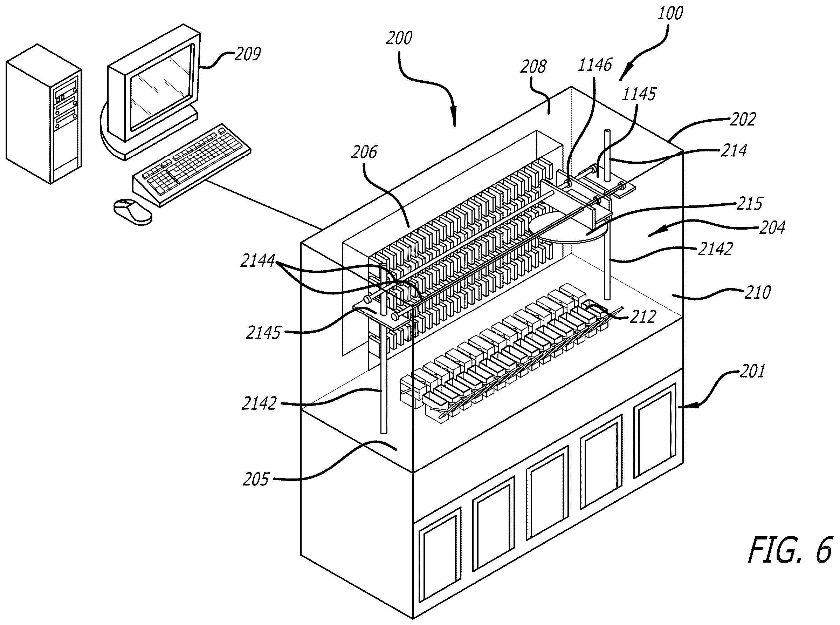

**Figure 6** illustrates a perspective view of an embodiment of a sample processing system. Sample processing system 200 includes housing 202 for enclosing and storing various components of processing system 200. Housing 202 includes reaction compartment 204 and storage compartment 201. Reaction compartment 204 is separated from storage compartment 201 by platform 205 that forms a base of reaction compartment 204. In addition to platform 205, opposing sidewalls project from platform 205 and a cover connects an end of each of the sidewalls. Together, the cover, sidewalls and platform 205 define a compartment within which sample processing occurs. Cover member 208 and door member 210 may be used to gain access to components within reaction compartment 204.

Reaction compartment 204 is dimensioned (e.g., has an interior volume) to accommodate a storage rack to store a number of reagent cartridges. Storage rack 206 may be mounted on platform 205 or to one of the sidewalls of reaction compartment 204 (e.g., a rear sidewall as viewed). Storage rack 206 may be used to store reagent cartridges. A representative reagent cartridge is a single use cartridge, such as an inkjet cartridge that contains a volume of a reagent that may be used in pathological or histological processing. Storage rack 206 contains an array of slots to store individual reagent cartridges in, for example, a column and row array. Storage rack 206 may include refrigeration to store reagent cartridges in a refrigerated state. Representative refrigeration may include a compressor that constricts a refrigerant vapor and pushes the vapor through coils where it liquifies and cools the storage rack slots.

Reaction compartment 204 is dimensioned to accommodate a plurality of sample processors 112 therein. Each sample processor 112 may be as described above with respect to **Figures 1-5** and the accompanying text. **Figure 6** representatively shows 30 sample processors 112 arranged in a planar (an xz plane) in a 15x2 configuration on platform 205. It is appreciated that the number of sample processors and configuration will depend in part on the area dedicated to reaction compartment 204. It is thus contemplated that the number of sample processors may vary as may their configuration. Disposed above sample processors 112 as viewed is a carousel assembly including gantry 214 and carousel 215. Carousel 215 is operable to house/contain a number of reagent cartridges and dispense reagents from respective reagent cartridges onto respective slides in a sample processor 112. Carousel 215 is operable to move on gantry 214 to position a reagent cartridge over individual sample processors 112 as well as to load/unload reagent cartridges from/to storage rack 206.

Sample processing system 200 also includes controller 209. Controller 209 includes non-transitory machine-readable instructions to control an operation of sample processing system including, but not limited to, loading/unloading reagent cartridges in storage rack 206 and loading/unloading reagent cartridges in carousel 215. **Figure 6** shows controller 209 outside of housing 202. It is appreciated that controller 209 may be outside housing 202 or a component inside housing 202.

**Figure 6** representatively shows 30 sample processor 112 arranged in a planar (an xz plane) in a 15x2 configuration with the sample processors 112 in a row arranged in a back-to-back configuration with respect to the other row. A first of the two rows may have sample processors 112 each having door 130 facing outward (away from storage rack 206). A second of the two rows may have sample processors 112 each having door 130 facing inward (toward storage rack 206). The back-to-back configuration allows each door 130 of a sample processor to be moved to an open position and a slide bed of the sample processor to be positioned outside a chamber 125 of body 120 of a sample processor as described above. Each sample processor 112 may be connected to platform 105 of reaction compartment 104 of housing 102.

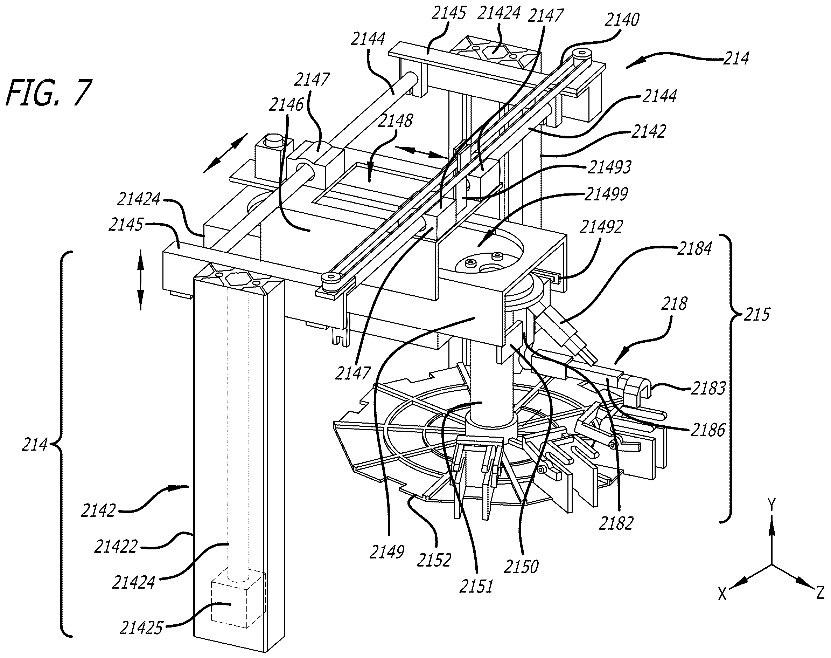

Referring to **Figure 6****,** in addition to sample processors 112, reaction compartment 204 of housing 202 of processing system 200 also includes gantry 214 that supports carousel 115. Gantry 214 and carousel 215 collectively describe a carousel assembly. **Figure 7** shows a perspective left side view of the carousel assembly in isolation. Gantry 214 includes two vertical (y-direction) posts 2142 connected to a base of reaction compartment 204. Vertical posts 2142 are separated by an x-direction distance greater than a distance covered by a row of sample processors 112 in reaction compartment 204. Disposed between vertical posts 2142 at a position above sample processors 112 are two horizontal supports 2144. Horizontal supports 2144 are representatively each cylindrically shaped and extend the x-direction distance of vertical posts 2142 and are each parallel to a base of reaction compartment 204. Horizontal supports 2144 are connected to vertical posts 2142 by end brackets 2145 (e.g., inverted L-shaped brackets). Horizontal supports 2144 are separated by a z-direction distance chosen for a z-direction travel of carousel 215 as will be detailed below. Connected to each of horizontal supports 2144 between end brackets 2145 is U-shaped bracket 2146 (e.g., an inverted U-shape as viewed). U-shaped bracket 2146 includes two legs separated by a base. Horizontal supports 2144 are connected to the base by linear bearings 2147. Linear bearings 2147 are connected to an upper or exposed side of the base of U-shaped bracket 2146 and allow U-shaped bracket 2146 to move in an x-direction on horizontal supports 2144. A base of U-shaped bracket 2146 includes opening 2148 therethrough, such as a rectangular-shaped opening. Also connected at one end of the upper or exposed side of the base of U-shaped bracket 2146 is tab 21493. Tab 21493 projects upward (in a y-direction) from the base. Tab 21493 is connected to timing belt 2140 that is used to move U-shaped bracket 2146 in an x-direction (longitudinal direction).

Connected to the base of U-shaped bracket 2146 below horizontal supports 2144 is transversal drive support bracket 2149. Transversal drive support bracket 2149 is U-shaped (e.g., an inverted U-shape as viewed) defined by a base and sidewalls. A top side of transversal drive support bracket 2149 as viewed has opening 21499 therethough. The base of transversal drive support bracket 2149 has a x-direction width that is less than a corresponding width of the base of U-shaped bracket 2146 so that the sidewalls of transversal drive support bracket 2149 are positioned between the sidewalls of U-shaped bracket 2146 and the sidewalls of transversal drive support bracket 2149 are connected to the respective sidewalls of U-shaped bracket 2146 via, for example, screws, rivets, or welds. On an inside of each of the sidewalls of transversal drive support bracket 2149 is a transversal linear guide that extends a z-direction length of the sidewalls or 70 percent to 90 percent of the z-direction length. Each transversal linear guide 21492 is at a similar y-direction distance from an end of a sidewall connected to the sidewall by, for example, screws, rivets, welds. Carousel 215 is connected to each transversal linear guide 21492.

Carousel 215 can move in three directions on gantry 214. Carousel 215 can move in an x-direction (longitudinal) with the movement of U-shaped bracket 2146. Carousel 215 can move in a y-direction (vertical) with the movement of end brackets 2145 up or down vertical posts 2142. Carousel 215 may move in a z-direction (transversal) with the movement of carousel 215 along each transversal linear guide 21492 in transversal drive support bracket 2149.

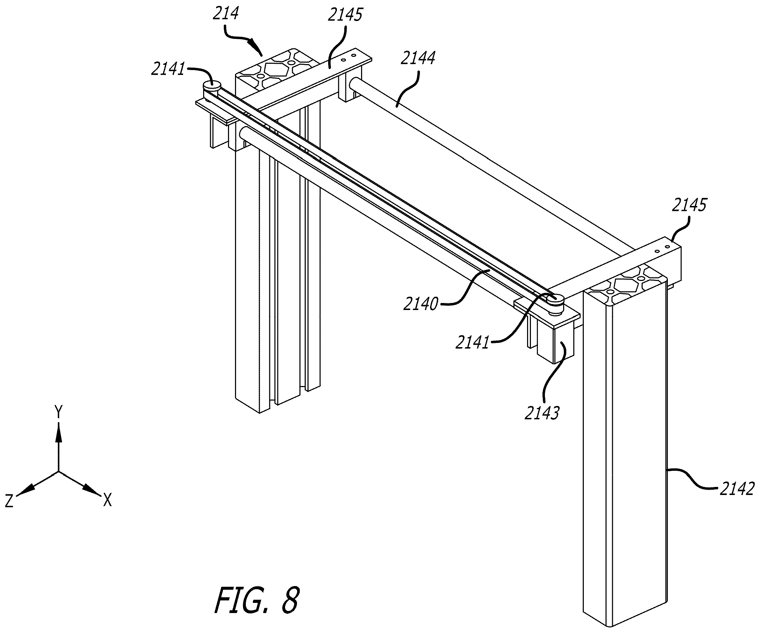

**Figure 8** shows a perspective right side view of a portion of gantry 214 to illustrate the x-direction (longitudinal) drive mechanism. In this view, gantry 214 includes horizontal supports 2144 connected to vertical posts 2142 by end brackets 2145. Connected to the top of each end bracket on one side of gantry 214 (left side as viewed in **Figure 8**) are gears 2141 that rotate in an xz plane. One of gears 2141 is connected to a shaft of motor 2143 with the motor operable to rotate the one gear in a clockwise or counterclockwise direction. Disposed around gears 2141 and extending above one of horizontal supports 2144 is timing belt 2140. Timing belt 2140 is operable to move in an x-direction (longitudinal direction) by gears 2141. Timing belt 2140 is connected to tab 21493 attached to U-shaped bracket 2146 via screws, rivets, pins, etc. (see **Figure 7**). The connection of timing belt 2140 to U-shaped bracket 2146 allows motor 2143 to move U-shaped bracket 2146 and, consequentially, transversal drive support bracket 2149 and carousel 115 in an x-direction' (longitudinal direction).

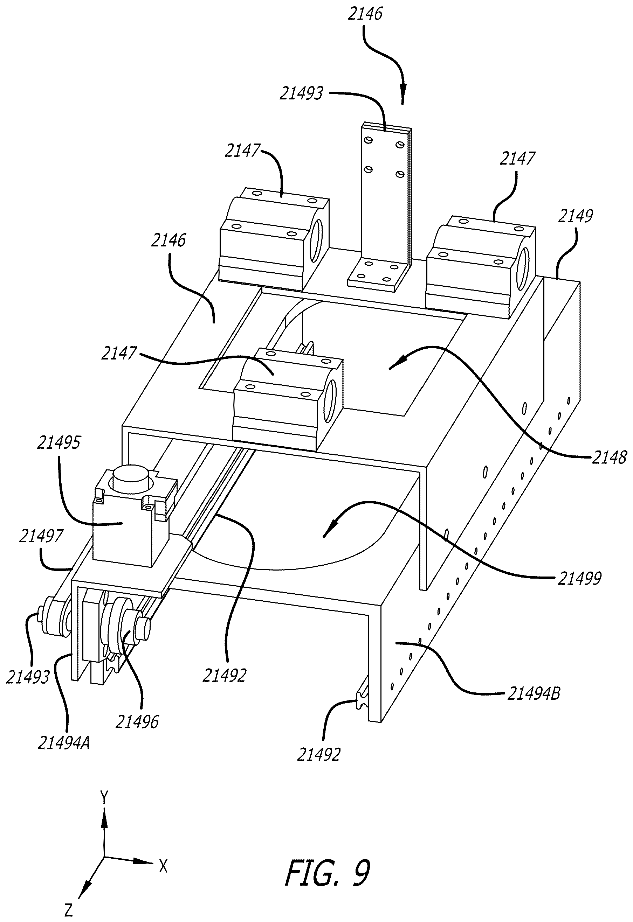

**Figure 9** shows a perspective rear side view of U-shaped bracket 2146 and transversal drive support bracket 2149 in isolation. **Figure 9** shows linear bearings 2147 are connected to an upper or exposed side of the base of U-shaped bracket 2146. Linear bearings 2147 support horizontal supports 2144 (see **Figure 7**)**.** Three linear bearings 2147 are shown with one linear bearing on one end of U-shaped bracket 2146 to support one horizontal support 2144 and two linear bearings 2147 on an opposite end of the base to support the other horizontal support 2144, with the z-direction separation of the one linear bearing from the two linear bearings equivalent to a z-direction distance between horizontal supports 2144 (see **Figure 6**)**.** A base of U-shaped bracket 2146 includes opening 2148 therethrough, such as a rectangular-shaped opening, between the one linear bearing 2147 and the two linear bearings 2147. Also connected at one end of the upper or exposed side of the base of U-shaped bracket 2146 is tab 21493. Tab 21493 projects upward (in a y-direction) from the base. Tab 21493 is connected to timing belt 2140 that is used to move U-shaped bracket 2146 in an x-direction (longitudinal direction) (see **Figure 7**)**.**

**Figure 9** also illustrates the z-direction (transversal) drive mechanism. **Figure 9** shows transversal drive support bracket 2149 connected to U-shaped bracket 2146 and positioned under the U-shaped bracket. On an inside of each of sidewall 21494A and sidewall 21494B of transversal drive support bracket 2149 is a transversal linear guide that extends a portion of the z-direction length of the sidewalls of transversal drive support bracket 2149 (e.g., 70 percent to 90 percent of the z-direction length). Each transversal linear guide 21492 is at a similar y-direction distance from an end of a sidewall (sidewalls 21494A and 21494B) connected to the sidewall by, for example, screws, rivets, welds.

The z-direction (transversal) drive mechanism illustrated in **Figure 9** also includes two gears 21493 connected to the exterior of sidewall 21494A of transversal drive support bracket 2149 (left sidewall as viewed). In **Figure 9****,** only one of two gears 21493 can be viewed at one end (a rear end) of sidewall 21494A of transversal drive support bracket 2149. A second of two gears 21493 is located at the opposite end (a front end) of sidewall 21494A of transversal drive support bracket 2149. Each of two gears 21493 rotates in yz plane. One of two gears 21493 is connected to worm gear 21496 that is rotated by a shaft of motor 21495 with motor 21495 operable to rotate in a clockwise or counterclockwise direction. Disposed around gears 21493 and extending along sidewall 21494A of transversal drive support bracket 2149 is timing belt 21497. Timing belt 21497 is operable to move in an z-direction (transversal direction) by gears 21493.

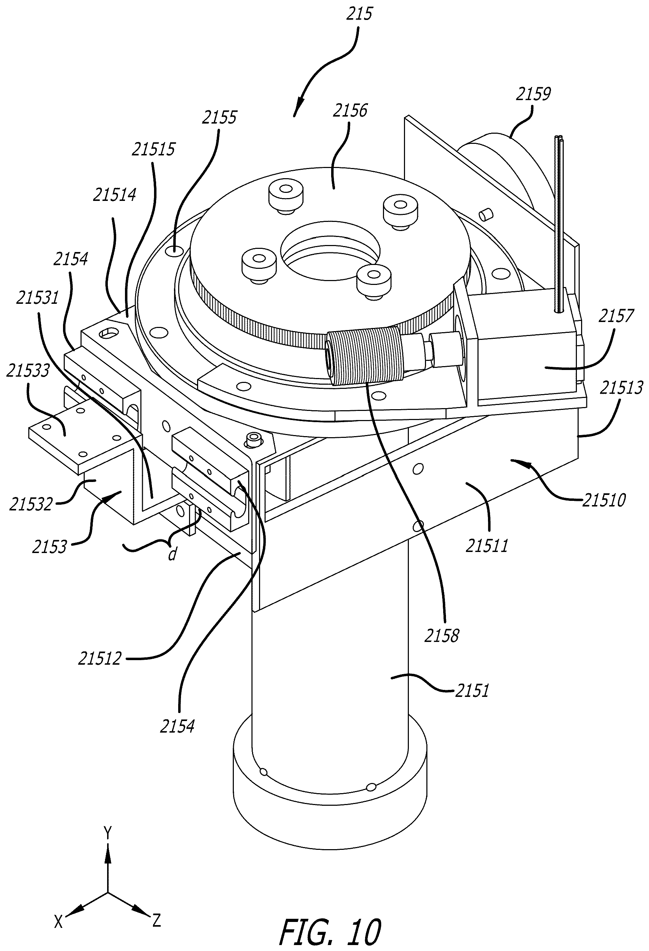

**Figure 10** is a perspective rear side view of a portion of carousel 215. Illustrated in this view is a portion of carousel 215 that connects to transversal drive support bracket 2149 of gantry 214. Carousel 215 includes rectangular shaped main bracket 21510 having a length dimension (x dimension) and a width dimension (z dimension) defined by opposing pairs of sidewalls to be positioned within transversal drive support bracket 2149. Sidewall 21511 and sidewall 21514 define a length dimension and sidewall 21512 and sidewall 21513 define a width dimension. Main bracket 21510 also includes top portion 21515 connected to each sidewall and having an opening therethrough for column 2151. Connected to sidewall 21512 of main bracket 21510 is z-shaped bracket 2153 having base 21531 projecting horizontally away (x direction) a distance, d, from sidewall 21512; midportion 21532 projecting vertically (y direction); and apex 21533 projecting horizontally away (x direction) from midportion 21532. The projection of z-shaped bracket 2153 away from sidewall 21512 a distance, d, allows midportion 21532 and apex 21533 to be positioned on an exterior side of a sidewall of transversal drive support bracket 2149 (sidewall 21494A) when main bracket 21510 is positioned within transversal drive support bracket 2149. Timing belt 21497 (see **Figure 9**) is connected to apex 2153 (via, for example, screws, rivets, pins, etc.) which allows motor 21495 to move main bracket 21510 of carousel 215 in a z-direction (transversal direction). Also attached to sidewall 21512 are transversal slide bearings 2154 operable to engage with transversal linear guide 21492 connected to an inside of sidewall 21494A of transversal support bracket 2149 (see **Figure 9**)**.** Projecting outward from sidewall 21513 (opposite sidewall 21512) is roller 2159. Roller 2159 is operable to engage and rotate in a yz plane within transversal linear guide 21492 of sidewall 21494B of transversal drive support bracket 2149.

As noted, main bracket 21510 includes top portion 21515 having an opening therethrough for column 2151. Column 2151 includes cut or inserted teeth around a top portion thereof. Disposed on top portion 21515 of main bracket 21510 is slew bearing 2155. Slew bearing 2155 includes an outer ring and an inner ring, the inner ring incorporating a gear with cut or inserted teeth that mesh with the teeth around a top portion of column 2151. Disposed on a top surface of slew bearing 2155 and connected thereto is gear 2156. Gear 2156 is operable to rotate in a xz plane and to rotate the inner ring of slew bearing 2155 in the same plane and consequently rotate column 2151. Main bracket 21510 remains stationary (does not rotate). Gear 2156 is rotated by motor 2157. Motor 2157 is mounted to top portion 21515 of main bracket 21510 and has a shaft extending therefrom that rotates in a yz plane. The shaft is connected to worm gear 2158 that meshes with gear 2156 to rotate gear 2156 in an xz plane. Referring to **Figure 7****,** a base of column 2151 of carousel 215 includes pedestal or cartridge carrier plate 2152 that is operable to engage and contain a number of reagent cartridges. Rotation of column 2151 by motor 2157 rotates pedestal 2152.

Referring again to **Figure 7****,** gantry 214 includes two vertical posts 2142. Vertical posts 2142 are shown with rectangular housing 21422 disposed around lead screws 21424. Each lead screw 21424 is connected to a respective end bracket 2145 and is driven (rotated clockwise or counterclockwise) by a respective stepper motor (motor 21425) with one stepper motor slaved to the other. The rotation of the lead screws 21424 provides y-direction movement of end brackets 2145 and, correspondingly, horizontal supports 2144 and carousel 215.

As noted above, carousel 215 can move in three directions on gantry 214. Carousel 215 can move in an x-direction (longitudinal) with the movement of U-shaped bracket 2146 by motor 2143. Carousel 215 can move in a y-direction (vertical) with the movement of end brackets 2145 up or down vertical posts 2142 by stepper motors 21425. Carousel 215 may move in a z-direction (transversal) with the movement of carousel 215 along each transversal linear guide 21492 in transversal drive support bracket 2149 driven by motor 21495. Each of motor 2143, stepper motor 21425 and motor 21495 is controlled by non-transitory machine-readable instructions in controller 209 that directs their operation (e.g., direction of rotation, run time, etc.).

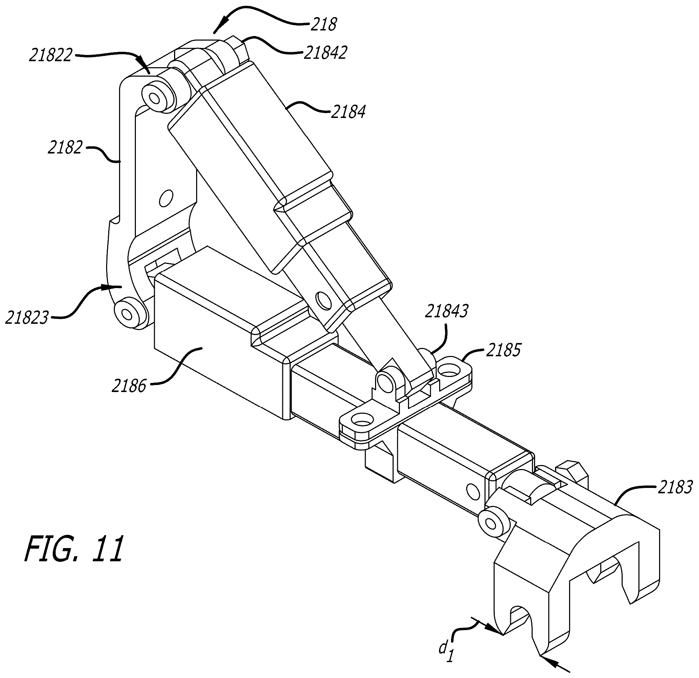

Carousel 215 is operable to automatically load/unload and engage or accommodate/disengage or disaccommodate a number of reagent cartridges on pedestal 2152. Referring to **Figure 7****,** carousel 215 can automatically load/unload reagent cartridges through the use of arm assembly 218. **Figure 11** shows a side perspective view of arm assembly 218 isolated from gantry 214 and carousel 215. Arm assembly 218 includes attachment bracket 2182 mounted via, for example, bolts, screws, rivets or pins to exterior surface of sidewall 21511 of main bracket 21510 (e.g., mounted at a midpoint of sidewall 21511 (see **Figure 10**)). Connected to a top of attachment bracket 2182 is short actuator 2184 and to a bottom of attachment bracket 2182 is long actuator 2186. In **Figure 7****,** long actuator 2186 projects approximately perpendicularly (horizontally as viewed) from attachment bracket 2182 and short actuator 2184 projects approximately diagonally (e.g., projects at a 45 degree angle) from attachment bracket 2182 to connect with long actuator 2186. Connected to an end of long actuator 2186 is cartridge engagement head 2183. Cartridge engagement head 2183 has pairs of fingers on opposite sides thereof that are separated by a distance, d₁, that allows the fingers to surround a protrusion of a reagent cartridge (described below) and engage and move the reagent cartridge.

**Figure 11** shows a top portion of attachment bracket 2182 includes clevis portion 21822 and a bottom portion includes clevis portion 21823. One end of short actuator 2184 is connected to clevis portion 21822 with, for example, clevis pin, screw or bolt in a manner that it can rotate about the pin, screw or bolt. Similarly, one end of long actuator 2186 is connected to clevis portion 21823 with, for example, clevis pin, screw or bolt in a manner that it can rotate about the pin, screw or bolt. Each of short actuator 2184 and long actuator 2186 includes an electrically actuated telescoping body (e.g., a three-stage body of successively smaller cylinders or pillars). A second end of short actuator 2184 is connected to the smallest stage or plunger of long actuator 2186 through linkage 2185. Linkage 2185 is proximal to engagement head 2183. The connection position of short actuator 2184 to long actuator 2186 is selected such that when short actuator 2184 is fully retracted, short actuator 2184 will rotate long actuator 2186 a few degrees (e.g., up to 10 degrees, such as 2 degrees to 8 degrees) about clevis portion 21823 causing a distal end of long actuator 2186 including engagement head to move toward clevis portion 21822 (to be lifted). Long actuator 2186 can be extended in the lifted configuration to a position over a reagent cartridge. Short actuator 2184 can then be extended to rotate long actuator 2186 in an opposite direction (i.e., rotate long actuator away from clevis portion 21822) to lower engagement head onto a reagent cartridge to grasp the reagent cartridge.

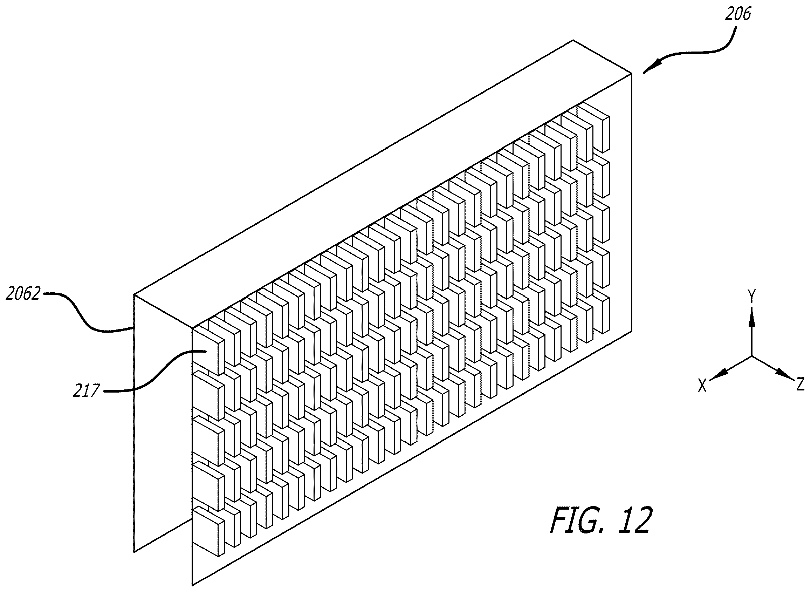

As noted above and illustrated in **Figure 6****,** sample processing system 200 includes housing 202 for enclosing and storing various components of processing system 200 including storage rack 206. Storage rack 206 may be used to store reagent cartridges (e.g., reagent cartridge 217). **Figure 12** shows a perspective front left side view of storage rack 206 isolated from other components of housing 202. Storage rack 206 includes housing 2062 that includes slots facing reaction compartment 204 and carousel 215. Storage rack 206 contains an array of slots to store individual reagent cartridges. **Figure 12** shows an array of five rows and 25 to 30 columns of slots. An array of rows and columns allows each slot to have an address (e.g., designated by row and column number) so that the system can know a location of a reagent cartridge and find a reagent cartridge in storage rack 206 or return a reagent cartridge to a particular slot in storage rack 206. In **Figure 12****,** reagent cartridges (reagent cartridge 217) are seated in all slots of the array. An exterior surface of each reagent cartridge may contain an identifier such as a barcode that contains identifying information about the reagent contained in the reagent cartridge and possibly other information such as an expiration date. The identifier may be read by a reader (e.g., a barcode reader) and the read information electronically provided to controller 209. One example is a reader on carousel 215 that is electronically linked to controller 209. An identifier on a reagent cartridge (e.g., reagent cartridge 217) can have a rewritable IC chip which can store the identity of the reagent, a lot number, an expiration date, and usage count.

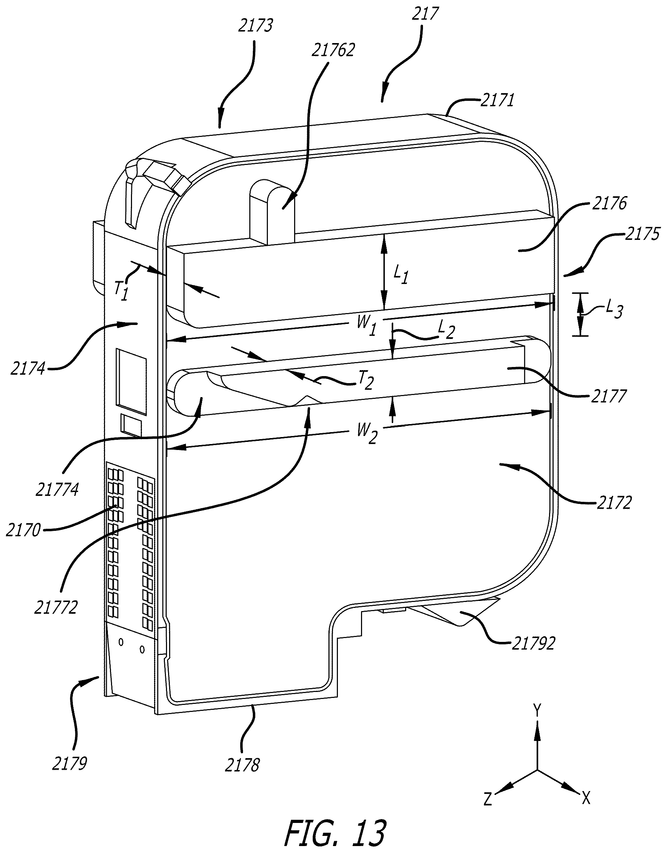

**Figure 13** shows a side perspective view of reagent cartridge 217 that is representative of reagent cartridges operable for storage in storage rack 206 and use in sample processing system 200. Representatively, reagent cartridge 217 has a z-direction depth on the order of 67.4 millimeters (mm), an x-direction width of 5 mm to 10 mm and a y-direction height of 98.5 mm. In another example, reagent cartridge 217 has a similar depth and width and a height of 70.8 mm (H₂ is less than H₁). Reagent cartridge 217 may be drop on demand-type (e.g., inkjet) cartridge, such as a thermal drop-on-demand type cartridge or a piezoelectric drop-on-demand type cartridge with the reagent cartridge including an individual dedicated printhead positioned at a base of reagent cartridge 217 as viewed.

Reagent cartridge 217 may contain a volume of a reagent and have a dedicated printhead. Each cartridge may be a single use cartridge. A single use cartridge in this context means that once the volume of the reagent in the cartridge is dispensed or used, the cartridge including its printhead is to be discarded or disposed of as opposed to being resupplied with a volume of reagent. A reagent cartridge may include (be supplied with) a volume of a reagent suitable for dispensing the reagent on one or more than one sample (e.g., tissue sample) on a slide. An example of a single use cartridge is a thermal inkjet cartridge. Referring to **Figure 13****,** reagent cartridge 217 includes outer shell or body 2171 having a generally rectangular shape constructed of a plastic material (e.g., a hard plastic or polymer). **Figure 13** shows reagent cartridge 217 including side 2172 and opposite side 2173 that represent yz-dimensions as well as side 2174 and opposite side 2175 that represent xy-dimensions. Side 2174 contacts and engages with carousel 215. Reagent cartridge 217 includes printhead 2178 operable to discharge a reagent from the cartridge. Printhead 2178 may be positioned at or near snout or base 2179 of reagent cartridge 217 (a bottom side as viewed) so that when the reagent cartridge is inserted in carousel 215, the ejection of reagent occurs through base 2179 of the reagent cartridge. The portion of snout or base 2179 including printhead 2178 (a printhead area) may extend below a remainder portion of base 2179 in a step-like manner. Printhead 2178 of reagent cartridge 217 includes a nozzle or an array of nozzles through which reagent is ejected or discharged through an inkjet process (e.g., a thermal inkjet process). A representative array of nozzles is a linear array (e.g., a single row or multiple rows) of nozzles allowing discharge of a reagent in a line(s) or row(s), such as across a microscope slide. In a thermal inkjet printhead, heat may be used to create an air bubble of reagent vapor that is exploded as it is forced through a printhead nozzle. Each nozzle may have a diameter on the order of 20 microns to 80 microns, such as 20 microns to 50 microns.

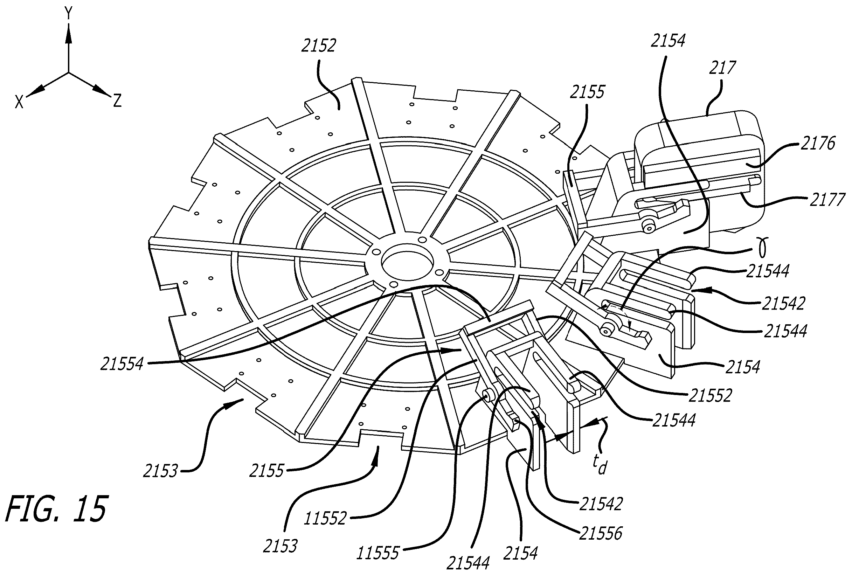

Reagent cartridge 217 also includes contacts 2170 on side 2174. Contacts 2170 are designed to mate with contacts in docks associated with a carousel (see **Figure 15****)** and the associated text). Contacts 2170 allow reagent cartridge to be controlled by controller 209 regarding, for example, discharge or firing of reagent through nozzles and the amount of reagent discharged.

Reagent cartridge 217 shown in **Figure 13** includes a pair of transfer guides on each of side 2172 and side 2173. The transfer guides on side 2172 are described, but it is appreciated that the transfer guides on side 2173 are similar. Transfer guide 2176 has a generally rectangular solid structure of, for example, a plastic material and has a width, W₁, that extends across the width of side 2172 parallel to a top surface of reagent cartridge 217. Transfer guide 2176 has a thickness, T₁, and length, L₁, sufficient to support reagent cartridge 217 in storage rack 106. A representative thickness, T₁, is on the order of 0.2 millimeter (mm) to 1 mm and a representative length, L₁, is on the order of 3 mm to 10 mm. Transfer guide 2176 includes engaging protrusion 21762 that projects vertically upward as viewed from a top side of the transfer guide. As illustrated, transfer guide 2176 is connected to the body 2171 (e.g., via adhesive) or is part of body 2171 a distance from a top of side 2172 as viewed such that the entirety of transfer guide 2176 including engaging protrusion 21762 is below the top surface of reagent cartridge 217. Transfer guide 2177 is connected to body 2171 (e.g., via adhesive) or is part of body 2171 of reagent cartridge 217 at a position below transfer guide 2176 as viewed. Transfer guide 2176 has a width, W₂, that extends across the width of side 2172 parallel to a top surface of reagent cartridge 217, a thickness, T₂, and length, L₂, sufficient to support reagent cartridge 217 in storage rack 206. A representative thickness, T₂, is similar to a thickness, T₁, of transfer guide 1176, e.g., on the order of 0.2 mm to 1 mm and a representative length, l₂, is on the order of 3 mm to 8 mm. Transfer guide 2177 is arranged parallel to transfer guide 2176 along side 2172 and is separated from transfer guide 2176 by a gap, L₃, sufficient for an arm of a cartridge support to slide between the transfer guides. Each of transfer guide 2176 and transfer guide 2177 may have a rounded or curved front end (end closest to side 2174 of reagent cartridge 217) to aid the positioning of an arm of a cartridge support between the transfer guides. A base of transfer guide 2177 also includes notch or docking groove 21772 as well as thinned portion 21774 (thickness less than a thickness, t₂) from the front end of transfer guide to a point just forward (1 mm or 2 mm forward) of notch or docking groove 21772. Thinned portion 21774 may have a rear angled sidewall from the top of transfer guide 2177 toward the base. Finally, reagent cartridge 217 includes frame locking bump 21792 that is a triangular prism with triangular bases parallel with side 2172 and 2173, respectively. Each of transfer guide 2176, transfer guide 2177 and frame locking bump 21792 may be made of a hard plastic material that is either attached to reagent cartridge 217 by, for example, adhesive, or is part of reagent cartridge 217 formed, for example, by way of a mold process.

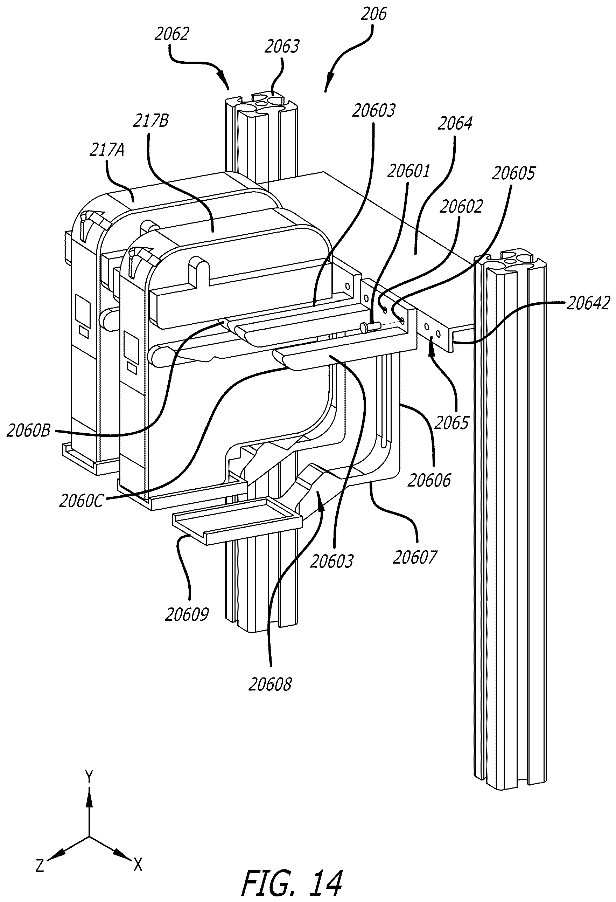

**Figure 14** shows a perspective front right side view of a portion of storage rack 206. In this view, storage rack 206 includes cartridge frame support 2064 extending between vertical posts 2063. Storage rack 206 is mounted to housing 202 with slots facing reaction compartment 204 and carousel 215. Cartridge frame support 2064 is an L-shaped body with base 20642 of the L-shaped body facing outward. Disposed in base 20642 of frame support 2064 are pairs of openings or holes 2065 through base 20642 that will be used to secure reagent cartridges to frame support 2064. **Figure 14** shows reagent cartridge 217A and reagent cartridge 217B connected to cartridge frame support 2064. Reagent cartridges are connected to cartridge frame support 2064 utilizing a cartridge frame. **Figure 14** shows cartridge frame 2060B supporting reagent cartridge 217B and cartridge frame 2060C connected to cartridge frame support 2064 but not supporting a reagent cartridge. It is appreciated that a separate cartridge frame is supporting reagent cartridge 217A but such cartridge frame is blocked from view.

Each cartridge frame (e.g., cartridge frame 2060B and cartridge frame 2060C) includes shoulder 20602 that is a relatively thin (e.g., 1 mm to 3 mm) rectangular body that has an x-direction length greater than a width of a reagent cartridge. Shoulder 20602 has two openings or holes 20605 that can be aligned with pairs of openings or holes 2065 in base 20642 of frame support 2064 to allow shoulder 20602 to be connected to base 20642 of cartridge frame support 2064 through the use of pins 20601. Pins 20603 are, for example, expander pins (e.g., plastic) with a distal end and body that projects from the cartridge frame and the distal end is operable to slide into an opening or hole 2065 and the body having a similar or greater diameter than the opening or hole to secure the pin through the application of a force in the direction of base 20642 of cartridge frame support 2064. Pins 20603 may be captive pins, meaning the pins are permanently secured to the cartridge frame, or may be free to be introduced into both shoulder 20602 of the cartridge frame and base 20642 of cartridge frame support 2064. Each cartridge frame (e.g., cartridge frame 2060B and cartridge frame 2060C) is designed to be removable from base 20642 of cartridge frame support 2064 through the use of a similar but opposite force required to insert the pins.

Projecting perpendicularly from shoulder 20602 as viewed (x-direction) are two arms 20603. Each arm 20603 has dimensions (e.g., a y-direction height and x-direction thickness) that allows an arm to fit between transfer guide 2176 and transfer guide 2177 on each side of a reagent cartridge in a manner that the reagent cartridge can slide into and out of the cartridge frame. Arms 20603 are separated from one another by a distance slightly greater than a width of a reagent cartridge (e.g., where a reagent cartridge has a width of 6 mm, arms 20603 are separated from one another by 6.3 mm to 7 mm). Arms 20603 have a length (z-direction) measured from shoulder 20602 of less than a depth of a reagent cartridge, such as a length approximately one-half the depth of a reagent cartridge. Projecting vertically downward as viewed from shoulder 20602 (y-direction), each cartridge frame includes spine 20606. Spine 20606 has a representative width (x-direction) on the order of 1 mm to 4 mm, a thickness (z-direction) on the order of 0.4 mm to 0.5 mm and a length (y-direction) that is longer than a height of a portion of reagent cartridge measured between a base of the reagent cartridge behind the printhead area and a bottom of transfer guide 2177 thereon, such as a 1 mm to 2mm longer. Projecting perpendicularly from a base of spine 20606 (z-direction) is leg 20607. A shape at the spine-leg interface may mirror a transition of a rear sidewall and a base of a reagent cartridge. In **Figure 14****,** a transition of a rear sidewall and a base of reagent cartridge 217B is curved and the spine-leg interface defines an opposite profile. Leg 20607 may have a thickness (y-direction) on the order of 0.5 mm to 1.5 mm; a width (x-direction) of 1 mm to 3 mm; and a length (z-direction) that extends a length of a base of a reagent cartridge exclusive of the printhead area. Disposed along a portion of the length dimension of leg 20607 is protuberance 20608 that projects upward from a surface of leg 20607 representatively 0.2 mm to 0.6 mm and has a representative shape of a triangular prism with triangular bases in a yz plane. Protuberance 20608 is located on leg 20607 a distance from spine 20606 that is greater than a distance from the rear side of a reagent cartridge (reagent cartridge 217, **Figure 13**) to a forward edge of frame locking bump 21792 so that when a reagent cartridge is positioned in cartridge frame (e.g., reagent cartridge 217B in cartridge frame 2069B), protuberance 20608 is forward of the frame locking bump projecting from a base of the cartridge. Connected at an end of leg 20607 of a cartridge frame is pad platform 20609. Pad platform 20609 may be rectangular body having a rectangular face or top (xz plane) that is larger than a printhead area. A representative area (xz dimensions) for pad platform is on the order of 225 mm² to 400 mm². Disposed on the face or top of pad platform 20609 may be an absorbent material (e.g., sponge) that can contact a printhead of a reagent cartridge, accept outflow from the printhead (e.g., excess reagent on a surface of printhead), and protect the printhead from drying out.

A body of a cartridge frame (e.g., cartridge frame 2060B, cartridge frame 2060C) may be made of a hard plastic material. Referring to **Figure 14****,** spine 20606 and leg 20607 may have dimensions (e.g., thickness, width) and/or a connection (e.g., 90° junction) that provide leg 20607 with give or a spring tension so that leg 20607 may move when a reagent cartridge is connected or removed. As noted above, a reagent cartridge includes frame locking bump 21792 projecting from its base (see reagent cartridge 217, **Figure 13**). When a reagent cartridge is placed into a cartridge frame (i.e., in response to a force applied to the reagent cartridge in a direction toward spine 20606 of the cartridge frame), arms 20603 of the cartridge frame slide between transfer guides 2176 and 2177 on respective opposing sides of the cartridge until frame locking bump 21792 at the base of the reagent cartridge contacts protrusion 20608. Continued force in a direction toward spine 20606 will cause leg 20607 to move downward (by the force of frame locking bump 21792 on the leg) causing protrusion 20608 to be moved downward and frame locking bump 21792 to pass protrusion 20608. Once frame locking bump 21792 is past protrusion 20608, leg 20607 will return to its original position (move upward) allowing protrusion 20607 to secure or capture the reagent cartridge in the cartridge frame. Separating a reagent cartridge from a cartridge frame is achieved in a similar manner. A force on the reagent cartridge in a direction away from spine 20606 will cause leg 20607 to move downward (by the force of frame locking bump 21792 on the leg) causing protrusion 20608 to be moved downward and frame locking bump 21792 to pass protrusion 20608.

Reagent cartridges (e.g., reagent cartridge 217A, reagent cartridge 217B) may be provided as an assembly including the reagent cartridge and the cartridge frame (e.g., cartridge frame 2060B, cartridge frame 2060C). The assembly may be provided to a consumer together in a package with the reagent cartridge in the cartridge frame or separate and with instructions for assembly.

Referring to **Figure 7****,** **Figure 11****,** **Figure 12** and **Figure 14****,** arm assembly 218 may be used to move reagent cartridges into and out of storage rack 206. As one example, a reagent cartridge assembly (reagent cartridge connected to cartridge frame) may be delivered to reaction compartment 204 (e.g., delivered to platform 205 inside reaction compartment 204) by an operator or a robot. Controller 209 includes non-transitory, machine-readable instructions that direct an operation of the various motors (e.g., direction of rotation, run time, etc.) to bring carousel 215 including arm assembly 218 to a position to grasp a delivered reagent cartridge assembly and place that reagent cartridge assembly in storage rack 206. These motors include motor 2143 that moves carousel 215 in an x-direction; motor 21495 that moves carousel 215 in a z-direction; motor 21425 that moves carousel 215 in a y-direction; and motor 2157 that rotates pedestal 2152. When carousel 215 is positioned as desired, the machine-readable instructions also include instructions to direct arm assembly 218 connected to carousel 215 to grasp the reagent cartridge assembly and transport the reagent cartridge assembly to storage rack 206. The instructions may further include instructions to place the reagent cartridge assembly at a predetermined address in storage rack 206. Arm assembly 218 includes cartridge engagement head 2183 at its distal end. Cartridge engagement head 2183 is operable based on instructions from controller 209 to be brought to a position over reagent cartridge 217 so that the pairs of fingers extending from cartridge engagement head 2183 surround and engage engagement protrusion 21762 of transfer guide 2176 on each side of reagent cartridge 217 (see **Figure 13**). The pairs of fingers on cartridge engagement head 2183 of arm assembly 218 (see **Figure 11**) may be spaced (separated) on opposite sides by a distance that is slightly less than a distance between engagement protrusions 21762 on each side of reagent cartridge 217. Representatively, the pairs of fingers on cartridge engagement head 2183 are biased to their separated distance but can flex outward a greater distance to engage engagement protrusions 21762 on opposite sides of reagent cartridge 217. The biased nature of the opposing fingers on cartridge engagement head 2183 act like a spring clamp to hold a reagent cartridge by engagement protrusions 21762. To place the reagent cartridge assembly into storage rack 206, the instructions direct arm assembly 218 to align pins 20603 in the cartridge assembly with a determined pair of openings or holes 20605 in base 20642 of frame support 2064 and apply enough force to the reagent cartridge assembly to insert the pins in the corresponding in base 20642 of frame support 2064.

To transfer a reagent cartridge from storage rack 206 to carousel 215, controller 209 includes machine-readable instructions that direct arm assembly to be positioned at a reagent cartridge (e.g., a front side of the reagent cartridge) and to grasp the reagent cartridge (via cartridge engagement head 2183 surrounding and engaging protrusion 21762 of transfer guide 2176 on each side of reagent cartridge 217). At this point, the reagent cartridge assembly including a reagent cartridge and a cartridge frame are mounted in storage rack 206. Once cartridge engagement head 2183 grasps engaging protrusions 21762 of transfer guide 2176 on each side of reagent cartridge 217, arm assembly 218 applies a force in a direction away from storage rack (and away from spine 20606 of the cartridge frame) to deflect leg 20607 of the cartridge frame (cause to move downward) by the force of frame locking bump 21792 of reagent container 217 on leg 20607 causing protrusion 20608 to be moved downward and frame locking bump 21792 to pass protrusion 20608. Once the cartridge is separated from its cartridge frame, instructions associated with controller 209 direct arm assembly 218 to deliver the cartridge to carousel 215.

**Figure 15** shows a portion of carousel 215 including pedestal or cartridge carrier plate 2152 isolated from a base of column 2151. Pedestal or cartridge carrier plate 2152 is operable to engage and contain a number of reagent cartridges. Pedestal 2152 has a representative decagon shape with slots 2153 in each side for a reagent cartridge. It is appreciated that the shape and the number of reagent cartridges that a carousel may accommodate may vary. Surrounding each slot 2153 is dock 2154 that projects from a surface of pedestal 2152 (upper surface as viewed). **Figure 15** shows three docks 2154. It is appreciated that pedestal 2152 may have as many docks as slots. Each dock 2154 is configured to contain a reagent cartridge therein. **Figure 15** shows reagent cartridge 217 stationed in one dock 2154. Each dock 2154 includes a back wall with an exterior surface facing a center of pedestal 2152 and two opposing sidewalls connected to the back wall. The back wall is inclined from top to bottom with the bottom of the back wall closer to a center of pedestal 2152. The sidewalls have a thickness, t_{d}, that is less than a thickness of transfer guides 2176 and 2177 on a reagent cartridge (see **Figure 13**). An upper portion of each sidewall contains a lateral slot 21542 that extends from a distal end of the sidewall to a portion near a proximal end (near but not to the back wall) to define arm portion 21544. Each arm portion 21544 has dimensions to allow arm portion 21544 to be positioned between transfer guides 2176 and 2177 on reagent container 217 and support the reagent container. Dock 2154 including arm portions 21544 may be constructed of a plastic (polymer) material.

An interior surface of a back wall of each dock 2154 includes contacts that mate with contacts 2170 on a reagent cartridge (reagent cartridge 217). The contacts are electrically connected to controller 209 allowing controller 209 to individually control a reagent cartridge in each dock 2154 on carousel 215.

Connected to the two opposing sidewalls of each dock 2154 at a point below arm portions 21544 as viewed is cartridge lock 2155. Cartridge lock 2155 includes two parallel arms 21552 separated by shoulder 21554. Shoulder 21554 has a width similar or slightly greater than a width of dock 2154 so that arms 21552 may be positioned and connected to an exterior of respective opposing sidewalls of dock 2154. **Figure 15** shows arm 21552 connected to a sidewall by pin 21555 (for example, a pin, screw or rivet) such that a length of a portion of each arm 21552 from shoulder 21554 to pin 21555 (a distal portion) is greater than a length of a portion of each arm 21552 from pin 21555 to a proximal end (an end furthest from shoulder 21554). The connection of cartridge lock 2155 to dock 2154 is such that shoulder 21554 can pivot upward and downward as viewed without contacting the back wall of dock 2154 (e.g., shoulder 21554 is 0.1 mm to 0.5 mm from an exterior surface of the back wall). A distal portion of each arm 21552 is generally rectangular and projects proximally perpendicularly from shoulder 21554. A proximal portion of each arm 21552 may project at an angle upward relative to the distal portion so that an angle, γ, defined between a distal portion and a proximal portion is on the order of 150° to 175°. A proximal portion of each arm 21552 may be generally rectangular and includes a proximal end having protrusion 21556 that is, for example, an upward projecting triangular prism with triangular bases parallel with the sides of the respective arm. Protrusion 21556 is sized to fit notch or docking groove 21772 in transfer guide 2177 of a reagent cartridge (see **Figure 13**). Cartridge lock 2155 may be biased by a spring at each of pins 2155 with shoulder closer to a surface of pedestal 2152. In this configuration, at least a portion of protrusion 21556 extends above a base of the notches defining arm portions 21544 of each dock 2154. A downward force on protrusion 21556 will cause protrusion to move downward and shoulder to move upward. Releasing such downward force will cause the opposite movement.

An imager, such as a camera may be connected to pedestal or cartridge carrier plate 2152. Representatively, an imager can be placed in one of slots 2153 instead of a dock and cartridge. Alternatively, an imager may be connected to an underside of carrier plate 2152. An imager may be oriented to capture an image of a microscope slide (such as an image of an entire microscope slide, an image of an identifier (e.g., a label (e.g., a barcode)) on the microscope slide and/or an image of a sample on the microscope slide) when the microscope slide is removed from chamber 125 of body 120 (e.g., when door 120 is moved to an open position and slide bed 115 may be moved from a position inside chamber 125 to a position outside chamber 125. Image capture may be controlled by a controller with instructions to, for example, capture an image of an identifier on a microscope slide prior to the microscope slide initially being moved into chamber 125, of a sample on the microscope slide following a dewaxing operation to locate the sample on the microscope slide (e.g., via detecting the sample (e.g., a stained sample)) to determine where to subsequently dispense a reagent (e.g., a primary reagent) and/or after a primary staining operation.

Referring again to **Figure 7****,** **Figure 11** and **Figure 15****,** a transfer of a reagent cartridge by arm assembly 218 from storage rack 206 or from platform 205 inside housing 202 is described. Controller 209 includes non-transitory, machine-readable instructions that include directing arm assembly to engage the reagent cartridge (e.g., reagent cartridge 217) with cartridge engagement head 2183 of arm assembly engaging protrusions 21762 on transfer guides 2176 of the reagent cartridge. Such instructions also include instructions to transport the reagent cartridge to one of docks 2154 on pedestal 2152 of carousel 215 and align transfer guides 2176 and 2177 of the reagent cartridge with arm portions 21554 of one of docks 2154 (align transfers guides 2176 and 2177 respectively above and below each arm portion 21554). Once aligned, the instructions further include instructions to slide the reagent cartridge into arm portion 21554 (in a proximal to distal direction) so that snout or base 2179 of reagent cartridge 217 is inward (e.g., faces a center of pedestal 2152). Arm assembly 218 applies a force in a direction of a center of pedestal 2152 sufficient to slide the reagent cartridge into arm portions 21554. Transfer guide 2177, having a thickness, t_{d}, greater than a thickness, t₂, of transfer guide 2177 will contact a proximal portion of each arm 21552 of cartridge lock 2155 and cause each arm to rotate about each pin 21555 and push the proximal portion of the arm downward. When that portion of transfer guide 2177 that includes dock locking groove 21772 is directly above protrusion 21556 of each arm 21552 of cartridge lock 2155, the bias of cartridge lock will cause each arm 21552 of cartridge lock 2155 to rotate in an opposite direction about pin 21555 and cause protrusion 21556 to engage locking groove 21772. At this point, the reagent cartridge is secured in dock 2154 and the instructions associated with controller 209 will direct arm assembly 218 to release its engagement with each engaging protrusion 21762.

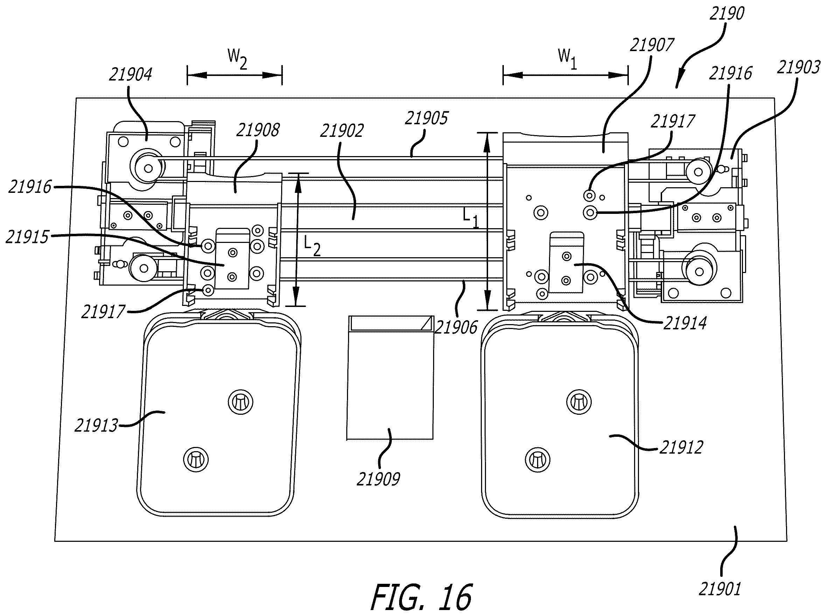

Before a reagent cartridge is delivered to a dock (dock 2154) on carousel 215 for a dispensing operation or returned to storage rack 206 from a dock, the reagent cartridge may go to a service station. **Figure 6** shows service station 2190 adjacent storage rack 206 mounted to a rear sidewall of reaction compartment 204 as viewed. Service station 2190 provides an area where a printhead of a reagent cartridge may be tested and cleaned prior to and/or after use in a dispensing operation to dispense reagent therefrom onto a microscope slide. **Figure 16** shows a front side view of service station 2190. Service station 2190 in this example includes a rear wall 21901. Connected to rear wall 21901 are pulley support 21903 and pulley support 21904. Each of pulley support 21903 and pulley support 21904 include an upper roller and a lower roller. Disposed on the upper roller of each of pulley support 21903 and pulley support 21904 is belt 21905. Disposed on the lower roller of each of pulley support 21903 and pulley support 21904 is belt 21906. Disposed between and connected to each of pully support 21903 and pully support 21904 is rail 21902. Slidably connected to rail 21902 and belt 21905 and belt 21906 is carriage 21907 and carriage 21908. Each of carriage 21907 and carriage 21908 may have a configuration to secure a reagent cartridge similar to dock 2154 (see **Figure 18**).

In the example shown in **Figure 16****,** carriage 21907 has a length, L₁, and a width, W₁, for a reagent cartridge of a first size, such as L₁ of 100 mm and W₁ of 60 mm and carriage 21908 has a length, L₁, and a width, W₁, for a reagent cartridge of a second size, such as L₂ of 72 mm and W₂ of 60 mm. It is noted that service station 2190 may be equipped with only one carriage or, if multiple carriages are included, the carriages may accommodate reagent cartridges of the same or different length and width dimensions. A base or backside as viewed of each of carriage 21907 and carriage 21908 includes electronic contacts or pins operable to mate with receptors (contacts 2170) on a front side of a reagent cartridge similar to the interior surface of a back wall of each dock 2154 of carousel 215 that includes contacts that mate with contacts 2170 on a reagent cartridge. **Figure 19** shows contacts or pins 21914 in carriage 21907 and contacts or pins 21915 in carriage 21908.

In one example, a reagent cartridge (reagent cartridge 217) has length and width dimensions to fit snugly within carriage 21907 or carriage 21908. As described above with respect to **Figure 15****,** a front of a reagent cartridge (reagent cartridge 217) includes electronic pin receptacles 22794 to mate with electronic contacts or pins 21917 in carriage 21907. A front side of a reagent cartridge may also include two diagonally spaced alignment sockets or openings that align with alignment pins 21917 in carriage 21907 to aide in the alignment of a reagent cartridge into carriage 21907 or carriage 21908.

**Figure 16** shows each of carriage 21907 and carriage 21908 connected to pulley support 21903 and pulley support 21904 through belt 21905 and belt 21906. Belt 21905 and belt 21906 may independently move or translate carriage 21907 and carriage 21908 laterally along rail 21902. Such movement allows each of carriage 21907 to bring a reagent container attached thereto to spittoon 21909 and to a wiping station (wiping station 21912 or wiping station 21913). Spittoon 21909 provides a vessel for a reagent cartridge in carriage 21907 or carriage 21908 to dispense reagent. Each of wiping station 11912 and wiping station 11913 may be a container (e.g., a rectangularly-shaped container containing a length of ribbon between rollers with the ribbon exposed at a top face or side of the container as viewed. The ribbon has a first side that is a cloth or similar absorbent material. A width of the ribbon may be at least as wide as a printhead of a reagent cartridge. The cloth or similar absorbent material provides a cleaning or wiping area for wiping a printhead (e.g., excess reagent on a printhead). After a wiping action by a printhead of a reagent cartridge on a portion of the ribbon, the ribbon may be advanced by instructions from controller 109 that direct a movement of the rollers in wiping station 21912 or 21913.

Each carriage may be electrically connected and communicate with controller 209. Carriage 21907 and carriage 21908 contain electronics to operate a reagent cartridge similar to electronics in dock 2154 to dispense reagent under the direction of non-transitory, machine-readable instructions associated with controller 209. When a reagent cartridge is connected to carriage 21907 or carriage 21908, instructions from controller 209 can direct the dispensing of reagent from the reagent cartridge, for example, into spittoon 21909 and contact between the printhead of a reagent cartridge and a ribbon of wiping station 21912 or wiping station 21913.

In a method of operation, instructions from controller 209 may direct a movement of one of carriage 21907 or carriage 21908 by belts 21905 and 21906 over spittoon 21909. At that time or a time before or after, instructions from controller 209 may direct arm assembly 218 to engage a reagent cartridge (e.g., reagent cartridge 217) and to install the reagent cartridge in the moved carriage (e.g., carriage 21907). Further instructions from controller 209 may then include instructions to direct electronics in carriage 21907 to cause the reagent cartridge to dispense or spit an amount of reagent into spittoon 21909 (e.g., an amount sufficient to wet the printhead and ensure it is not clogged). Following a dispensing operation, instructions from controller 209 may direct that the reagent cartridge be brought to wiping station 21912 or wiping station 21913 to clean residual reagent on the printhead of the reagent cartridge through a wiping action by the printhead on a ribbon of the wiping station. After wiping, instructions from controller 209 may direct arm assembly 218 to engage the reagent container and deliver the reagent container to a dock (dock 2154) on carousel 215 for a dispensing operation or to storage rack 206.

In the above discussion a reagent dispensing technique employing inkjet technology is described. A dispensing alternative includes a dispensing cartridge connected to a cartridge pump assembly that pumps a reagent from the dispensing cartridge onto a sample. Another dispensing alternative may include pipette transfer from a reagent container to a sample.

The following describes a representative operation of the sample processing system described with reference to **Figures 1-15****.** Initially, individual microscope slide(s) each containing at least one tissue sample will be brought to reaction compartment 204 by an operator or robot. Each microscope slide will be placed individually in a sample processor (sample processor 112). Non-transitory, machine-readable instructions from controller 209 may direct a door (door 130) of the body 120 of a sample processor to open and then direct linear actuator 155 of a sample processor 112 to move slide bed 115 from a position inside the chamber (chamber 125) of body 120 to a position outside the chamber. A microscope slide may then be placed with a tissue sample side facing upward (facing a top of body 120) or facing downward (facing slide bed 115). Once a slide is placed on slide bed 115, non-transitory, machine readable instructions from controller 209 may direct that an image of an identifier on the microscope slide be captured by an imager (e.g., an imager connected to pedestal or cartridge carrier plate 2152) and further instructions may then direct the slide bed to be returned to inside chamber 125 (direct linear actuator to move slide bed 115 inside chamber 125) and direct the closing of door 130 of the respective reaction stations 112.

A microscope slide including a tissue sample brought to reaction compartment 104 may be embedded with an embedding agent (e.g., paraffin) or may be processed to remove the embedding agent and adhere the tissue sample to the slide (i.e., pre-processed to remove the paraffin and adhere the tissue sample to the slide). Where a slide is brought to chamber 125 having a tissue sample embedded with an embedding agent such as paraffin, non-transitory, machine-readable instructions from controller 209 may direct the system to perform an adherence and de-paraffinization (dewaxing) protocol on the embedded tissue sample. Representatively, instructions may direct that the slide with the embedded tissue sample be heated utilizing, for example, hot water introduced into a reservoir in chamber 125 and/or a slide heater connected to slide bed 115 (e.g., below slide bed 115 or above slide bed 115) as part of a baking operation. The heat treatment should be sufficient to allow a sample on a slide to adhere or further adhere to a slide (a glass slide) and possibly to soften the embedding medium associated with a section on the slide. Representatively, the slide may be heated to a temperature on the order of 55°C to 70°C.

Following the heat treatment, instructions may direct that the heat be removed from chamber 125. If the reservoir below slide bed 115 was filled with hot water, the instructions from controller 209 may direct drain valve 159 (see **Figure 1**) to open and the hot water drained to a waste collector through conduit 158. If a slide heater(s) was(were) used, the instructions from controller 209 may direct that the slide heater(s) be turned off. Subsequent instructions from controller 209 may direct that the embedded tissue sample on the slide be exposed to a volume of a dewaxing solution such as xylene sufficient to coat the sample portion of slide. A dewaxing solution such as xylene may be stored in a container in storage compartment 201 beneath reaction compartment 204 as a bulk reagent (see **Figure 6**). The dewaxing solution container may be connected to a fluid connector 190 on a top of body 120 (see **Figure 5**) of the reaction compartment containing the embedded tissue sample on the slide. Instructions associated with controller 209 may direct that a dewaxing solution be transferred (e.g., pumped) from the dewaxing solution container to the respective fluid connector 190 and onto a surface of the slide in the reaction compartment if the tissue sample is facing upward or onto slide bed 115 if the tissue sample is facing downward (toward the slide bed). Following dispensing of the dewaxing solution, the instructions associated with controller 209 may direct that the tissue sample soak in the dewaxing solution for a period of time (e.g., one minute to five minutes). Following the soak time, instructions associated with controller 209 may direct slide bed 115 to be tilted by rotary motor 140 to drain the dewax solution from the tissue sample and/or slide bed 115 (see **Figure 3**)**.**

Following a period to remove the dewaxing solution and paraffin from the surface of the slide, further instructions associated with controller 209 may direct valve 159 (see **Figure 1**) to open and the dewaxing solution to be drained to a waste collector through conduit 158. In another example, a dewaxing protocol may involve the dispensing of several reagents sequentially. For example, a first reagent applied to a tissue sample on a slide may be xylene. After a xylene treatment and its subsequent removal, the dewaxing protocol may specify that the tissue sample be exposed to an alcohol (e.g., ethyl alcohol). In such instance, a container containing xylene will be connected to a first fluid connector 190 on a top of body 120 and a container containing the alcohol will be connected to a second fluid connector 190.

Following a dewaxing process, instructions associated with controller 209 may direct that the tissue sample be rinsed with a volume of a washing solution, such as water or other aqueous wash solution. A container containing a wash solution may be connected to a fluid connector (fluid connector 190) on body 120 to provide the washing solution to the tissue sample. The washing solution may also include an amount of stain such as eosin in the wash solution to stain a sample on a slide. Generally, following a dewaxing operation, an embedding material in the section is removed leaving the sample as a virtually colorless object on a slide. Adding an amount of a stain such as eosin in the wash solution may allow the presence and location of the sample on the slide to be detected. Following the washing process, instructions associated with controller 209 may direct slide bed 115 to be rotated to remove the washing solution from a surface of the slide and direct the washing solution to be drained to a waste collector through conduit 158 and valve 159.

Following a washing process, non-transitory, machine-readable instructions from controller 209 may direct a door (door 130) of the body 120 of a sample processor to open and then direct linear actuator 155 of a sample processor 112 to move slide bed 115 from a position inside the chamber (chamber 125) of body 120 to a position outside the chamber. Additional instructions from controller 209 may direct that an image of a sample and possibly an identifier on the microscope slide be captured by an imager (e.g., an imager connected to pedestal or cartridge carrier plate 2152) and further instructions may then direct the slide bed to be returned to inside chamber 125 (direct linear actuator to move slide bed 115 inside chamber 125) and direct the closing of door 130 of the respective reaction stations 112. Further instructions may direct that a position of the sample or a portion thereof on the microscope slide be located and stored for use in a staining operation.

Following a washing process and possible capture of an image of the sample and identifier, instructions associated with controller 209 may direct that the tissue sample be subjected to an antigen retrieval process to reverse the antigen masking effects of aldehyde fixation. A container containing an antigen retrieval solution, such as a tris- or citrate-based retrieval solution, may be stored in storage compartment 201 beneath reaction compartment 204 as a bulk reagent and be connected to a fluid connector (fluid connector 190) on body 120 via a conduit to provide the antigen retrieval solution to the tissue sample. Instructions associated with controller 209 may direct that the antigen retrieval solution be provided to a surface of the tissue sample. Instructions associated with controller 209 may also direct that the antigen retrieval process be performed at an elevated temperature and possibly an elevated pressure. Representatively, instructions may direct that the slide with the tissue sample be heated utilizing a slide heater(s) in chamber 125 to a temperature on the order of, for example, 100°C to 130°C. Instructions may further direct that the reaction compartment be brought to an elevated pressure of, for example, 1.0 atmosphere (atm) (15 pounds per square inch (psi) to 1.7 atm (25 psi)) by, for example, introducing air or an inert gas into chamber 125 such as through fitting 172 (e.g., a valve or valve and conduit) disposed in body 120 to chamber 125 (see **Figure 1****)** using compressor or pump 170. Utilizing an elevated pressure allows an antigen retrieval process to be expedited to, for example, a process time of five minutes compared to prior process times of 45 minutes or more under atmospheric conditions. In another example, an antigen retrieval process may be performed at an elevated humidity level, such as 70 percent to 100 percent relative humidity. As noted above, the humidity may be elevated by the inclusion of a fluid (e.g., water) below slide bed 115 in chamber 125 of a body. Before providing an antigen retrieval solution to a surface of a tissue sample, instructions from controller 209 may direct valve 156 be opened to allow a fluid into the chamber and a certain volume of fluid be introduced into chamber 125 through valve 156. Steam produced in an external boiler may be supplied into chamber 125, such as through conduit 157. Instructions from controller may direct heat element 154 to heat the fluid. Alternatively, air or an inert gas (ambient or heated) may be bubbled through an external reservoir (ambient or heated) to produce humid air at a desired moisture level that could be supplied into chamber 125, such as through conduit 157. Further, an ultrasonic generator could produce water droplets (ambient or heated) that could be fed to chamber 125, such as through conduit 157.

Once an antigen retrieval process is completed, instructions associated with controller 209 instructions associated with controller 209 may direct any fluid in chamber 125 used to produce a desired humidity level be drained to a waste collector through conduit 158 and valve 159 and slide bed 115 to be tilted to remove the antigen retrieval solution from a surface of the slide and drained to a waste collector through conduit 158 and valve 159. Further instructions may then direct that the tissue sample be rinsed with a volume of a washing solution, such as water or a wash buffer such as TBS or phosphate-buffered saline containing a surfactant. Following washing, instructions associated with controller 209 may direct slide bed 115 to be rotated to remove the wash solution from a surface of the microscope slide and drained to a waste collector through conduit 158 and valve 159.

For a staining process, instructions associated with controller 209 may direct a motor associated with sample processor 112 containing a microscope slide with a sample ready for staining to open a door (door 130) of body 120. Additional instructions from controller 209 may then direct slide bed 115 to be moved outside a chamber (chamber 125) of body 120. If not done earlier, further instructions from controller 209 may direct that a location of the sample on the microscope slide or a portion thereof for staining be determined based on the captured image of the sample on the microscope slide following a washing operation.

Before or after a microscope slide is moved outside a chamber for a staining process, instructions associated with controller 209 may direct the retrieval of a reagent cartridge from storage rack 206 and the loading or docking of the reagent cartridge at one of docks 2154 on pedestal 2152 of carousel 215. Further instructions associated with controller 209 may direct that the reagent cartridge loaded on pedestal 2152 be positioned with a snout or base portion of the reagent cartridge is over the tissue sample on the raised slide. Such instructions include directing motor 2157 to rotate column 2151 and accordingly pedestal 215 and motor 2143 to move carousel 215 in a longitudinal direction. Once positioned, instructions may direct the ejecting (e.g., printing) of reagent from the reagent cartridge onto the sample at the predetermined location of the sample or a portion thereof. Representatively, a drop-on-demand-type printhead, such as a thermal inkjet printhead, in the reagent cartridge may dispense a reagent, such as a detection agent or antibody, in droplets having a volume of 1 picoliter (pL) to 10 nanoliters (nL), or 1 pL to 5 nL, or 1 pL to 1 nL, or 1 pL to 500 pL, or 1 pL to 250 pL or 1 pL to 100 pL, or 1 pL to 50 pL. Representatively, an inkjet cartridge can deliver 15 microliters (µL) per square inch per pass or more (at least 15 µL) where a pass is a dispense (ejection) of reagent from the muiltiple nozzles in a printhead of an inkjet cartridge either while the reagent cartridge (carousel) and slide are stationary or where at least one of the reagent cartridge (carousel) and slide move unidirectionally to expand a dispense area on the slide. Representatively, controller 209 directs a printhead of a reagent cartridge to dispense multiple drops (i.e., drops from multiple nozzles) to produce a higher volume of reagent per pass. Representative delivery amounts through a thermal inkjet printhead include 15 µL to 30 µL per square inch per pass, 15 µL to 25 µL per square inch per pass, and 15 µL to 20 µL per square inch per pass.

Instructions associated with controller 209 may also direct that a staining process be performed at an elevated temperature and possibly an elevated pressure. Representatively, instructions may direct that the slide with the tissue sample be heated utilizing a slide heater(s) in chamber 125 to a desired temperature. Instructions may further direct that the reaction compartment be brought to an elevated pressure of, for example, 1.0 atmosphere (atm) (15 pounds per square inch (psi) to 2 atm (30 psi)) by, for example, introducing air or an inert gas into chamber 125 such as through fitting 172 (e.g., a valve or valve and conduit) disposed in body 120 to chamber 125 (see **Figure 1**) using compressor or pump 170. In another example, a staining process may be performed at an elevated humidity level, such as 70 percent to 100 percent relative humidity. As noted above, the humidity by techniques such as described above with respect to the antigen retrieval process may be directed by instructions from controller 209 for a staining process.

Following a staining process, instructions associated with controller 209 may direct the movement of the reagent cartridge and carousel away from a position above the slide and direct a to return slide bed 115 and the microscope slide to the chamber (chamber 125) and the closing of the door (door 130) of body 120. Additional instructions associated with controller 209 may direct that the sample on the microscope slide be extended an incubation period (to, for example, allow a primary antibody to bind to a targeted antigen). The incubation may be done in a humid environment. Following any incubation period, instructions associated with controller 209 may direct that the tissue sample be rinsed with a volume of a washing solution to remove any non-reacted/non-conjugated reagent. Following rinsing, instructions associated with controller 209 may direct slide bed 115 to be rotated to a non-horizontal position in chamber 125 to remove the wash solution from a surface of the slide. Additional instructions may then direct the wash solution to be drained to a waste collector through conduit 158 and valve 159. Once all staining processes are finished for tissue sample on a microscope slide, instructions associated with controller 209 may direct the system to alert a user that the microscope slide is ready for removal. Additional instructions from controller 209 may then direct door 130 of body 120 of sample processor 112 to be opened and slide bed 115 to be moved to a position where the microscope slide thereon is outside the chamber (chamber 125) to allow an operator or robot to retrieve the microscope slide.

### Examples:

### Example 1

The use of elevated pressure in a sealed sample processor such as sample processor 112 was evaluated for an antigen retrieval process versus a control at ambient pressure. **Table 1** describes the samples, conditions and results. At 25 psi (1.7 atm), an antigen retrieval process was completed in five minutes or 10 minutes with satisfactory and comparable results to the control at ambient pressure completed in 30 minutes. The control conditions were ambient pressure, temperature of 80°C to 90°C and 80 percent to 100 percent humidity.

**Table 1**

| Slide | Reagent | Conditions | Time | Result |
|---|---|---|---|---|
| 1 | High pH antigen retrieval on tonsil tissue, stained with CK5/6 antibody | Pressure: 25 psi | 5 minutes | Satisfactory and comparable to control results of no pressure and a time of 30 minutes |
| | | Temperature: 120-130°C | | |
| | | Humidity: 80-100% | | |
| 2 | High pH antigen retrieval on tonsil tissue, stained with CK5/6 antibody | Pressure: 25 psi | 10 | Satisfactory and comparable to control results of no pressure and a time of 30 minutes |
| | | Temperature: 120-130°C | minutes | |
| | | Humidity: 80-100% | | |
| 3 | High pH antigen retrieval on tonsil tissue, stained with Ki67 antibody | Pressure: 25 psi | 5 minutes | Satisfactory and comparable to control results of no pressure and a time of 30 minutes |
| | | Temperature: 120-130°C | | |
| | | Humidity: 80-100% | | |
| 4 | Citrate antigen retrieval on brain tissue, stained EpCAM antibody | Pressure: 25 psi | 5 minutes | Satisfactory and comparable to control results of no pressure and a time of 30 minutes |
| | | Temperature: 120-130°C | | |
| | | Humidity: 80-100% | | |
| 5 | Citrate antigen retrieval on brain tissue, stained Factor XIIIA antibody | Pressure: 25 psi | 5 minutes | Satisfactory and comparable to control results of no pressure and a time of 30 minutes |
| | | Temperature: 120-130°C | | |
| | | Humidity: 80-100% | | |

### Example 2

The use of elevated pressure in a sealed sample processor such as sample processor 112 was evaluated for a reduction in antibody staining time versus a control at ambient pressure. **Table 2** describes the samples, conditions and results. At 25 psi (1.7 atm), a process was completed in two minutes, another in five minutes and a third at 15 minutes with satisfactory and comparable results to the control at ambient pressure, ambient temperature and 80-100% humidity completed in 30 minutes.

**Table 2**

| Slide | Reagent/Tissue | Conditions | Antibody Incubation Time | Conclusion |
|---|---|---|---|---|
| 7 | Citrate antigen retrieval on brain tissue. Stained with S100 antibody | Pressure: 25 psi | 2 minutes | Satisfactory and comparable to control results of no pressure and a time of 30 minutes |
| | | Temperature: Ambient | | |
| | | Humidity: 80-100% | | |
| 8 | Citrate antigen retrieval on brain tissue. Stained with S100 antibody | Pressure: 25 psi | 5 minutes | Satisfactory and comparable to control results of no pressure and a time of 30 minutes |
| | | Temperature: Ambient | | |
| | | Humidity: 80-100% | | |
| 9 | Citrate antigen retrieval on brain tissue. Stained with S100 antibody | Pressure: 25 psi | 15 minutes | Satisfactory and comparable to control results of no pressure and a time of 30 minutes |
| | | Temperature: Ambient | | |
| | | Humidity: 80-100% | | |

### ASPECTS

The specification includes the following aspects:
1. A sample processor comprising:
   a body comprising an inner surface that defines a chamber including an opening in a side of the body and comprising a volume to accommodate a least one microscope slide therein;
   a door comprising a first position to cover the opening of the body and a second position to expose a portion of the chamber through the opening;
   a slide bed disposed in the chamber; and
   one of an internal humidity generator disposed in the chamber and an external humidity generator coupled to the chamber.
2. The sample processor of aspect 1, wherein the sample processor comprises an internal humidity generator and the internal humidity generator comprises a reservoir below the slide bed.
3. The sample processor of aspect 1 or aspect 2, further comprising a heat source.
4. The sample processor of any of aspects 1-3, wherein the heat source comprises a heater to heat a fluid in the reservoir.
5. The sample processor of aspect 3, wherein the heat source comprises a heater to heat the slide bed directly or indirectly.
6. The sample processor of any of aspects 1-5, further comprising a pressure source operable to increase a pressure in the chamber above ambient.
7. The sample processor of aspect 6, wherein the pressure source is operable to maintain a pressure in the chamber at at least 25 psi (1.7 atm).
8. The sample processor of aspect 6 or aspect 7, wherein the pressure source comprises a compressor coupled to and in fluid communication with the body operable to introduce air into the chamber.
9. The sample processor of aspect 1, wherein the sample processor comprises an external humidity generator.
10. The sample processor of aspect 9, further comprising at least one heat source.
11. The sample processor of aspect 9 or aspect 10, wherein the heat source comprises a heater to heat the slide bed directly or indirectly.
12. The sample processor of any of aspects 9-11, wherein the at least one heat source is operable to maintain a temperature in the chamber of at least 100°C.
13. The sample processor of any of aspects 1-12, wherein the body comprises an outer surface and an opposite inner surface, wherein the outer surface comprises a plurality of hose couplings coupled thereto, and the inner surface comprises a plurality of nozzles in fluid communication with respective ones of the plurality of hose couplings.
14. The sample processor of any of aspects 1-13, further comprising a nozzle in the chamber, the nozzle operable to be connected to a conduit outside the body and the nozzle operable to dispense a reagent in a spray or curtain flow toward the slide bed.
15. The sample processor of any of aspects 1-14, wherein the one of the internal humidity generators and the external humidity generator are operable to produce a humidity in the chamber greater than 60 percent.
16. A sample processing system comprising at least one of the sample processor of any of aspects 1-15 and further comprising at least one reagent outside the body of the at least one sample processor and coupled to a conduit that extends into the chamber of the at least one sample processor.
17. The sample processing system of aspect 16, wherein the at least one reagent may be heated to a temperature above ambient.
18. The sample processing system of aspect 16 or aspect 17, wherein the at least one sample processor is contained in a reaction compartment and the sample processing system comprises a refrigerated storage rack operable to store a number of reagent cartridges.
19. A method comprising:
   subjecting a sample on a microscope slide in a sealed chamber to a pressure greater than ambient and a humidity greater than 60 percent; and
   processing the sample.
20. The method of aspect 19, wherein processing the sample comprises contacting the sample with a reagent.
21. The method of aspect 19 or aspect 20, wherein the reagent comprises a stain.
22. The method of any of aspects 19-21, wherein contacting the sample with a reagent comprises dispensing the reagent through a thermal inkjet process.
23. The method of aspect 22, wherein dispensing comprises dispensing the one or more reagents in an amount of at least 15 microliters (µL) per square inch per pass.
24. The method of any of aspects 19-23, wherein processing the sample comprises exposing antigenic sites in or on the sample.
25. The method of any of aspects 19-23, further comprising subjecting the sample to a temperature greater than ambient.

In the foregoing specification, the invention has been described with reference to specific embodiments thereof. It will, however, be evident that various modifications and changes can be made thereto without departing from the broader spirit and scope of the invention as set forth in the appended claims. For example, a reagent cartridge as disclosed herein (e.g. reagent cartridge 217) may contain solvent or water instead of a reagent and used for purposes other than, for example, staining a sample on a microscope slide. The specification and drawings are, accordingly, to be regarded in an illustrative rather than a restrictive sense.

## Claims

1. A sample processor comprising:
a body comprising an inner surface that defines a chamber including an opening in a side of the body and comprising a volume to accommodate a least one microscope slide therein;
a door comprising a first position to cover the opening of the body and a second position to expose a portion of the chamber through the opening; and
a slide bed disposed in the chamber;
one of an internal humidity generator disposed in the chamber and an external humidity generator coupled to the chamber.

2. The sample processor of claim 1, wherein the sample processor comprises an internal humidity generator that comprises a reservoir below the slide bed and/or an external humidity generator.

3. The sample processor of claim 2, further comprising a heat source that optionally comprises a heater to heat a fluid in the reservoir when the sample processor comprises an internal humidity generator, or a heater to heat the slide bed directly or indirectly, and the heat source is optionally operable to maintain a temperature in the chamber of at least 100°C.

4. The sample processor of claim 1, further comprising a pressure source operable to increase a pressure in the chamber above ambient or the pressure source is operable to maintain a pressure in the chamber at at least 25 psi (1.7 atm) and the pressure source optionally comprises a compressor coupled to and in fluid communication with the body operable to introduce air into the chamber.

5. The sample processor of claim 1, wherein the body comprises an outer surface and an opposite inner surface, wherein the outer surface comprises a plurality of hose couplings coupled thereto, and the inner surface comprises a plurality of nozzles in fluid communication with respective ones of the plurality of hose couplings.

6. The sample processor of claim 1, further comprising a nozzle in the chamber, the nozzle operable to be connected to a conduit outside the body and the nozzle operable to dispense a reagent in a spray or curtain flow toward the slide bed.

7. The sample processor of claim 1, wherein the one of the internal humidity generator and the external humidity generator are operable to produce a humidity in the chamber greater than 60 percent.

8. A sample processing system comprising at least one of the sample processor of any of claims 1-7 and further comprising at least one reagent outside the body of the at least one sample processor and coupled to a conduit that extends into the chamber of the at least one sample processor.

9. The sample processing system of claim 8, wherein the at least one reagent may be heated to a temperature above ambient.

10. The sample processing system of claim 8, wherein the at least one sample processor is contained in a reaction compartment and the sample processing system comprises a refrigerated storage rack operable to store a number of reagent cartridges.

11. A method comprising:
subjecting a sample on a microscope slide in a sealed chamber to a pressure greater than ambient and a humidity greater than 60 percent; and
processing the sample.

12. The method of claim 11, wherein processing the sample comprises contacting the sample with a reagent.

13. The method of claim 12, wherein the reagent comprises a stain.

14. The method of claim 12, wherein contacting the sample with a reagent comprises dispensing the reagent through a thermal inkjet process, optionally in an amount of at least 15 microliters (µL) per square inch per pass.

15. The method of any of claims 11-14, wherein processing the sample comprises exposing antigenic sites in or on the sample.

16. The method of any of claims 11-14, further comprising subjecting the sample to a temperature greater than ambient.
